# EUROPEAN PATENT SPECIFICATION

(11) **EP 3 992 046 B1**
(45) Date of publication and mention of the grant of the patent: **11.11.2026**
(21) Application number: 20831729.7
(22) Date of filing: 04.06.2020
(51) Int. Cl.: B60W 30/09, B60W 30/16, B60W 30/095

(54) **VEHICLE DRIVING CONTROL METHOD AND DEVICE**
FAHRZEUGSTEUERUNGSVERFAHREN UND -VORRICHTUNG
PROCÉDÉ ET DISPOSITIF DE COMMANDE DE CONDUITE DE VÉHICULE

(30) Priority: 28.06.2019 CN 201910580410
(43) Date of publication of application: 04.05.2022
(73) Proprietor: Great Wall Motor Company Limited, Baoding, Hebei 071000 (CN)
(72) Inventor: ZHAO, Minghui, Baoding, Hebei 071000 (CN); CHANG, Junjie, Baoding, Hebei 071000 (CN); TIAN, Jiangtao, Baoding, Hebei 071000 (CN); LI, Pu, Baoding, Hebei 071000 (CN); ZHEN, Longbao, Baoding, Hebei 071000 (CN); ZHANG, Kai, Baoding, Hebei 071000 (CN); WU, Huixiao, Baoding, Hebei 071000 (CN); SUN, Guangchao, Baoding, Hebei 071000 (CN)
(74) Representative: dompatent
(86) International application number: PCT/CN2020/094286
(87) International publication number: WO 2020/259243

(56) References cited:
- WO-A1-2018/110607
- WO-A1-2018/110607
- CN-A- 1 572 576
- CN-A- 103 895 644
- CN-A- 107 021 096
- JP-A- 2010 083 314
- US-A1- 2017 240 184
- US-A1- 2018 170 370
- US-A1- 2018 257 644

## Description

### FIELD

Embodiments of the present disclosure relate to the technical field of vehicle control, and in particular, to a vehicle driving control method and device.

### BACKGROUND

With the development of social economy, vehicle stock has increased year by year, but due to relative lag of road infrastructure construction and an improvement of people's driving habits, the incidence of traffic accidents is on the rise.

Currently, in the conventional technology, in order to reduce the occurrence of traffic accidents, lane line information is generally recognized by taking an image through a camera in front of a vehicle. It is determined whether the vehicle deviates from the current lane according to the lane line information. When it is determined that the vehicle deviates from the current lane, a relevant control system on the vehicle will make a steering wheel turn so as to change the driving direction of the vehicle, thereby pulling the vehicle back into the current lane and avoiding the collision of the vehicle with a vehicle in an adjacent lane.

However, the inventor found that there are at least the following problems in the conventional technology. When a vehicle in the adjacent lane of the own vehicle deviates from the adjacent lane and drives toward the region in front of the own vehicle, the own vehicle will not turn the steering wheel automatically to change the direction of the vehicle since the own vehicle does not deviate from the current lane. If the driver does not change the direction of the vehicle in time due to panic at this time, collisions are very likely to occur. Therefore, it is still impossible to effectively avoid the occurrence of traffic accidents by determining whether to turn the steering wheel of the vehicle simply based on determining whether the vehicle deviates from the current lane, and the incidence of traffic accidents is still higher.

Relevant state of the art for the present invention is described in US 2018/170370 A1.

### SUMMARY

The present invention is defined in the independent claims.

A vehicle driving control method and device are provided in embodiments of the present disclosure, to solve the problem in the conventional technology that the incidence of traffic accidents is still higher.

In a first aspect, a vehicle driving control method is provided in an embodiment of the present disclosure. The method includes:
acquiring a driving parameter of a vehicle, feature information of an object in an oblique front region of the vehicle, and relative information between the object and the vehicle, where the relative information includes a lateral relative distance between the object and the vehicle;
determining whether to generate a parameter adjustment instruction according to the driving parameter, the feature information of the object and the relative information under different driving conditions, where the parameter adjustment instruction includes a distance adjustment instruction and/or a speed adjustment instruction, where the driving conditions include a first condition where there is no median strip between the vehicle and an adjacent lane, a second condition where an object in the adjacent lane enters a straight front region of the vehicle, and/or a third condition where the vehicle needs to exceed the object in the adjacent lane; and
adjusting the lateral relative distance between the vehicle and the object according to the distance adjustment instruction and/or adjust a driving speed of the vehicle according to the speed adjustment instruction, in response to generating the parameter adjustment instruction.

In a second aspect, a vehicle driving control device is provided in an embodiment of the present disclosure. The device includes:
an information acquisition module, configured to acquire a driving parameter of a vehicle, feature information of an object in an oblique front region of the vehicle, and relative information between the object and the vehicle, where the relative information includes a lateral relative distance between the object and the vehicle;
an information processing module, configured to determine whether to generate a parameter adjustment instruction according to the driving parameter, the feature information of the object and the relative information under different driving conditions, where the parameter adjustment instruction includes a distance adjustment instruction and/or a speed adjustment instruction, where the driving conditions include a first condition where there is no median strip between the vehicle and an adjacent lane, a second condition where an object in the adjacent lane enters a straight front region of the vehicle, and/or a third condition where the vehicle needs to exceed the object in the adjacent lane; and
a driving control module, configured to adjust the lateral relative distance between the vehicle and the object according to the distance adjustment instruction and/or adjust a driving speed of the vehicle according to the speed adjustment instruction, in response to generating the parameter adjustment instruction.

In a third aspect, a vehicle driving control device is provided in an embodiment of the present disclosure. The device includes:
a sensor, configured to collect a driving parameter of a vehicle;
a camera, configured to collect feature information of an object in an oblique front region of the vehicle;
a radar device, configured to collect relative information between the object and the vehicle; and
a controller including a memory and a processor, where the memory stores a computer program, and the program when being executed by the processor implements the vehicle driving control method as described in the above first aspect and various possible designs of the first aspect.

In a fourth aspect, a computer-readable storage medium is provided in an embodiment of the present disclosure. The computer-readable storage medium stores a computer-executable instruction. The processor when executing the computer-executable instruction implements the vehicle driving control method as described in the above first aspect and various possible designs of the first aspect.

In the vehicle driving control method and device according to embodiments of the present disclosure, it is determined the driving condition of the vehicle and situations of object in the oblique front region of the vehicle based on the driving parameter of the vehicle, the feature information of the object in the oblique front region of the vehicle, and the relative information between the object and the vehicle, and it is to determine whether the object in the oblique front region will affect the vehicle, that is, to determine whether there is a risk of collision. If the vehicle is at risk of collision with the object, a corresponding parameter adjustment instruction is generated, so as to adjust the lateral relative distance between the vehicle and the object and adjust the driving speed of the vehicle in advance to keep the vehicle away from objects that may collide with the vehicle, thus to effectively avoid the collision of the vehicle with objects in the oblique front region, reduce the occurrence of traffic accidents and decrease the incidence of traffic accidents.

### BRIEF DESCRIPTION OF THE DRAWINGS

In order to more clearly describe the technical solutions in the embodiments of the present disclosure or in the conventional technology, drawings to be used in the description of the embodiments or the conventional technology are briefly described hereinafter. It is apparent that the drawings described below merely show some embodiments of the present disclosure, and those ordinary skilled in the art may obtain other drawings according to the provided drawings without any creative effort.
Figure 1 is a first flowchart of a vehicle driving control method according to an embodiment of the present disclosure;
Figure 2 is a schematic diagram of a vehicle driving on a lane according to an embodiment of the present disclosure;
Figure 3 is a second flowchart of a vehicle driving control method according to an embodiment of the present disclosure;
Figure 4 is a third flowchart of a vehicle driving control method according to an embodiment of the present disclosure;
Figure 5 is a schematic structural diagram of a vehicle driving control device according to an embodiment of the present disclosure; and
Figure 6 is a schematic diagram of a hardware structure of a vehicle driving control device according to an embodiment of the present disclosure.

### DETAILED DESCRIPTION OF EMBODIMENTS

In order to make purposes, technical solutions and advantages of the present disclosure more clear, technical solutions of the embodiments of the present disclosure are clearly and completely described below in conjunction with drawings of the embodiments of the present disclosure. Apparently, the embodiments described below are only part of embodiments of the present disclosure, rather than all the embodiments. Any other embodiments obtained by those ordinary skilled in the art based on the embodiments of the present disclosure without any creative effort fall within the protection scope of the present disclosure.

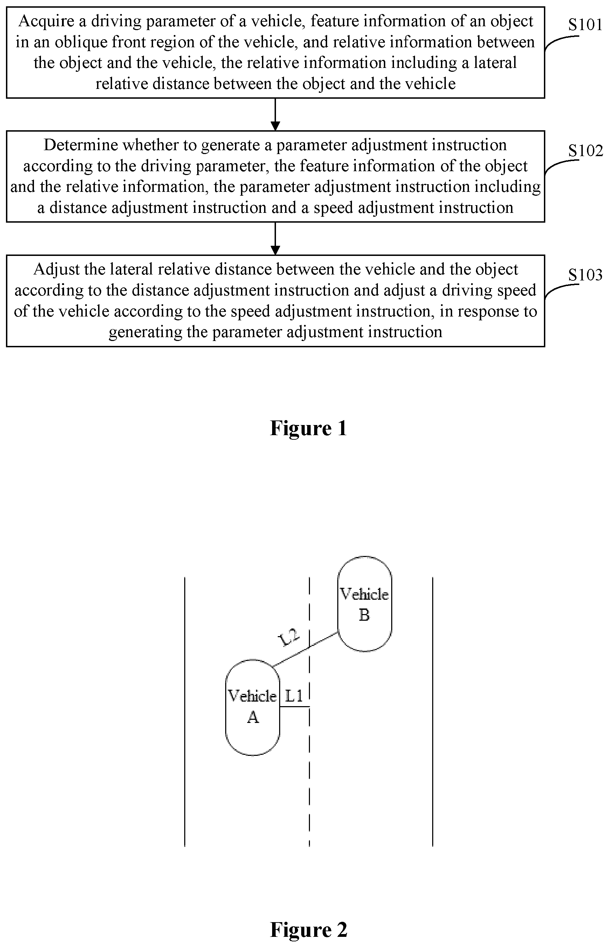

Figure 1 is a first flowchart of a vehicle driving control method according to an embodiment of the present disclosure. The execution subject in this embodiment may be a controller installed on the vehicle. As shown in Figure 1, the method includes the following steps S101 to S103.

In step S101, a driving parameter of a vehicle, feature information of an object in an oblique front region of the vehicle, and relative information between the object and the vehicle are acquired. The relative information includes a lateral relative distance between the object and the vehicle.

In the process of vehicle driving control, it is required to obtain the actual driving parameter of the vehicle, the feature information of the object in the oblique front region of the vehicle, and the relative information between the vehicle and the object, and the driving parameter of the vehicle is adjusted based on these data, so as to reduce the occurrence of traffic accidents.

Specifically, the driving parameter of the vehicle is collected by various sensors installed on the vehicle. The feature information of the object in the oblique front region of the vehicle is recognized by collecting images through a camera installed on the vehicle. The relative information between the object in the oblique front region of the vehicle and the vehicle is detected by a radar device installed on the vehicle.

During the driving process, the above sensor, camera, and radar device respectively send the acquired data to the controller via a bus, and the controller respectively receives the driving parameter sent by the sensor on the vehicle, the feature information of the object sent by the camera on the vehicle, and the relative information sent by the radar device on the vehicle.

The radar device includes a front radar, a first front angle radar, and a second front angle radar. The front radar is installed on a front anti-collision beam of the vehicle, and the first front angle radar and the second front angle radar are respectively installed on left and right sides of a front bumper of the vehicle. The radar device may also include a first rear angle radar and a second rear angle radar. The first rear angle radar and the second rear angle radar are respectively installed on left and right sides of a rear bumper of the vehicle.

The feature information of the object includes a distance between the object and a target lane line. The target lane line is a lane line between the object and the vehicle, for example, the distance L1 in Figure 2. The relative information includes a longitudinal relative speed between the vehicle and the object. The driving parameter includes a driving direction of the vehicle.

The camera is installed at an interior rear-view mirror of a front windshield of the vehicle.

The oblique front region of the vehicle refers to a region in an oblique front of the vehicle and located in the left and/or right adjacent lane of the vehicle. For example, vehicle A in Figure 2 only has an adjacent lane in the right direction, and then the object in the oblique front region of vehicle A is Vehicle B.

The object may be a vehicle, a pedestrian, an obstacle, or the like.

The longitudinal direction in the present disclosure refers to the direction parallel to the lane line, and the lateral direction refers to the direction perpendicular to the lane line.

In this embodiment, the radar device and the camera are used to collect data, so as to realize 360-degree collection without blind zone and improve the accuracy of data collection.

In step S102, it is determined whether to generate a parameter adjustment instruction according to the driving parameter, the feature information of the object and the relative information. The parameter adjustment instruction includes a distance adjustment instruction and a speed adjustment instruction.

In this embodiment, under different driving conditions, it is determined, according to the driving parameter, the feature information of the object and the relative information, whether the object in the oblique front region of the vehicle has an impact on the vehicle, for example, whether a collision will occur, thus to determine whether to generate the parameter adjustment instruction to adjust the driving parameter of the vehicle.

The driving conditions include a first condition where there is no median strip between the vehicle and the adjacent lane, and a second condition where a vehicle in the adjacent lane changes a lane.

In step S103, the lateral relative distance between the vehicle and the object is adjusted according to a distance adjustment instruction and a driving speed of the vehicle is adjusted according to a speed adjustment instruction, in response to generating the parameter adjustment instruction.

In this embodiment, if it is determined, according to the current driving condition of the vehicle itself and the situation of the object in the oblique front region, that the object in the oblique front region may affect the vehicle, a corresponding parameter adjustment instruction is generated. The parameter adjustment instruction includes a distance adjustment instruction and a speed adjustment instruction.

When the distance adjustment instruction is generated, the distance adjustment instruction may be sent to an EPS (Electrical Power Steering) system on the vehicle, and the EPS system controls the vehicle to steer, thereby increasing the lateral distance between the vehicle and the target object that needs to be avoided and refraining from collision of the vehicle with the target object.

When the speed adjustment instruction is generated, the speed adjustment instruction may be sent to an ESP (Electronic Stability Program) system and an engine, so as to adjust the vehicle speed accordingly and avoid collisions between the vehicle and the target object.

When the parameter adjustment instruction needs to be generated, a corresponding prompt message is generated and sent to a meter on the vehicle, to remind the driver and avoid the driver from panic.

It can be seen from the above description that it is determined the driving condition of the vehicle and the condition of the object in the oblique front region based on the driving parameter of the vehicle, the feature information of the object in the oblique front region of the vehicle, and the relative information between the object and the vehicle, and it is to determine whether the object in the oblique front region will affect the vehicle, that is, to determine whether there is a risk of collision. If the vehicle is at risk of collision with the object, a corresponding parameter adjustment instruction is generated, so as to adjust the lateral relative distance between the vehicle and the object and adjust the driving speed of the vehicle in advance to keep the vehicle away from objects that may collide with the vehicle, thus to effectively avoid the collision of the vehicle with objects in the oblique front region and reduce the occurrence of traffic accidents.

During the driving process, the driving parameter of the vehicle may be adjusted according to the current driving conditions of the vehicle, so as to provide the driver with safer driving guarantee. The following detailed embodiments are used to describe the specific process of adjusting the driving parameter under different driving conditions in detail below.

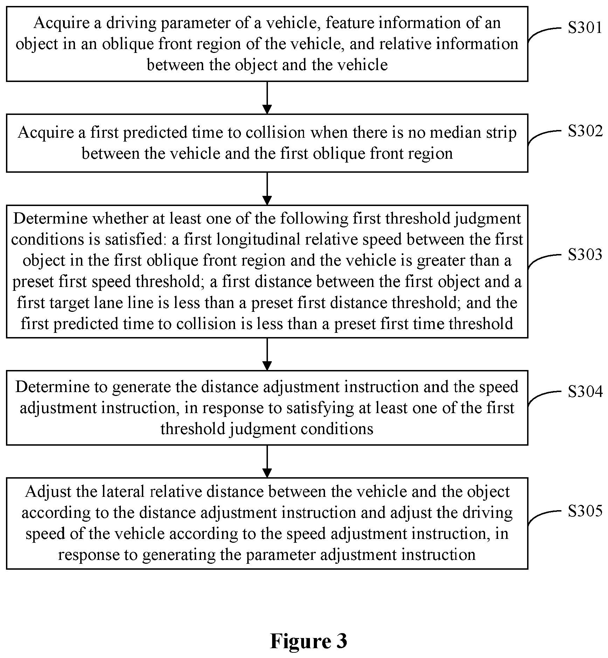

Figure 3 is a second flowchart of a vehicle driving control method according to an embodiment of the present disclosure. On the basis of the embodiment of Figure 1, this embodiment describes in detail the specific implementation process of this embodiment. The oblique front region includes a first oblique front region, and the first oblique front region may be a region in oblique front of the vehicle and located in an adjacent lane in a first direction of the vehicle. The first direction may be, for example, a left direction or a right direction of the vehicle, or the like. As an example, the first oblique front region in the embodiment of the present disclosure is specifically a region in oblique front of the vehicle and located in the adjacent lane to the left of the vehicle. As shown in Figure 3, the method includes the following steps S301 to S305.

In step S301, a driving parameter of a vehicle, feature information of an object in the oblique front region of the vehicle, and relative information between the object and the vehicle are acquired. The relative information includes a lateral relative distance between the object and the vehicle.

The above step S301 is similar to step S101 in the embodiment of Figure 1, and will not be repeated in this embodiment.

In step S302, a first predicted time to collision is acquired when there is no median strip between the vehicle and the first oblique front region. The first predicted time to collision refers to a time when the vehicle will collide with a first object in the first oblique front region.

When there is no median strip between the lane where the vehicle is located and the adjacent lane corresponding to the first oblique front region, if an oncoming vehicle driving in an opposite direction is close to the lane line and has a relatively high speed, it is prone to collision and serious traffic accidents. Therefore, when there is no median strip between the lane and the adjacent lane, it is necessary to determine, according to the collected driving parameter of the vehicle, the feature information of the first object and the relative information between the vehicle and the first object, whether it is needed to adjust the relative lateral distance between the vehicle and the first object and whether to control the speed, thus to avoid collisions.

In the process of determining whether to adjust the relative lateral distance between the two and adjust the speed of the vehicle, it is necessary to calculate time to collision (TTC) based on the collected driving parameter of the vehicle, the feature information of the first object, and the relative information between the vehicle and the first object. The calculated TTC is taken as the first predicted time to collision.

The first predicted time to collision may be a second predicted longitudinal time to collision, which is calculated according to the longitudinal relative distance between the vehicle and the first object.

The driving direction specified by the lane corresponding to the first oblique front region is opposite to the driving direction of the vehicle.

There are many mature methods for calculating the time to collision, and the method for calculating the time to collision is not limited in the present disclosure.

In step S303, it is determined whether to satisfy at least one of the following first threshold judgment conditions.

The first threshold judgment conditions include:
a first longitudinal relative speed between the first object in the first oblique front region and the vehicle is greater than a preset first speed threshold;
a first distance between the first object and a first target lane line is less than a preset first distance threshold; and
the first predicted time to collision is less than a preset first time threshold.

In this embodiment, it is determined whether the first longitudinal relative speed between the first object and the vehicle is greater than the corresponding first speed threshold, whether the first distance between the first object and the first target lane line is less than a corresponding first distance threshold, and whether the first predicted time to collision is less than the first time threshold.

In step S304, it is determined to generate the distance adjustment instruction and the speed adjustment instruction, in response to satisfying at least one of the first threshold judgment conditions.

In this embodiment, as long as at least one of the first threshold judgment conditions is satisfied, the distance adjustment instruction and the speed adjustment instruction are generated. For example, only the threshold judgment condition that the first longitudinal relative speed between the first object and the vehicle is greater than the corresponding first speed threshold is satisfied, and then it is determined that the vehicle is likely to collide with the first object. The distance adjustment instruction and the speed adjustment instruction need to be generated to make the vehicle move laterally along a direction away from the first object and slow down according to a preset acceleration until the vehicle decelerates to the preset speed, ensuring that the vehicle drives at a safe lateral relative distance and longitudinal relative speed in relative to the first object, so as to avoid collisions.

In an embodiment, in order to improve the accuracy in determining whether the vehicle will collide with the first object, the distance adjustment instruction and the speed adjustment instruction may be generated when all the threshold judgment conditions in the above first threshold judgment conditions are satisfied simultaneously. That is, when the first longitudinal relative speed between the first object and the vehicle is greater than the preset first speed threshold, the first distance between the first object and the first target lane line is less than the preset first distance threshold, the first predicted time to collision is less than the preset first time threshold, it is determined that the vehicle is more likely to collide with the first object, and the distance adjustment instruction and the speed adjustment instruction need to be generated.

In an embodiment, a second predicted lateral time to collision is acquired. The threshold judgment condition that the first distance between the first object and the first target lane line is less than the preset first distance threshold among the above first threshold judgment conditions may be replaced with that the second predicted lateral time to collision is less than a preset second lateral time threshold, and the replaced first threshold judgment conditions include that the first longitudinal relative speed between the first object in the oblique front region and the vehicle is greater than the preset first speed threshold, the second predicted lateral time to collision is less than the preset second lateral time threshold, and the first predicted time to collision is less than the preset first time threshold.

It is understandable that the above defining the first oblique front region as the region in oblique front of the vehicle and located in the adjacent lane to the left of the vehicle is only for the convenience of understanding. In practice, it is detected not only the adjacent lane in the left direction of the vehicle, but also the adjacent lane in the right direction of the vehicle. When the current lane of the vehicle has only one adjacent lane, the first oblique front region is the region in oblique front of the vehicle in the adjacent lane. For example, when there is only an adjacent lane to the left of the vehicle, the first oblique front region is the region in oblique front of the vehicle in the adjacent lane to the left of the vehicle. When there is only an adjacent lane to the right of the vehicle, the first oblique front region is the region in oblique front of the vehicle in the adjacent lane to the right of the vehicle. It is not limited whether the lane corresponding to the above first oblique front region is the adjacent lane to the right of the vehicle or the adjacent lane to the left of the vehicle herein.

In a possible design, the vehicle may also have two adjacent lanes, including a left adjacent lane and a right adjacent lane. Correspondingly, the oblique front region also includes a third oblique front region. The third oblique front region is a region in oblique front of the vehicle in an adjacent lane in a second direction of the vehicle. The second direction may be the right direction of the vehicle. The first threshold judgment conditions also include that there is no risk of collision in the third oblique front region.

Correspondingly, the determining whether to generate the parameter adjustment instruction according to the driving parameter, the feature information of the object and the relative information includes:
determining whether to satisfy at least one of the following first threshold judgment conditions:
   the first longitudinal relative speed between the first object in the first oblique front region and the vehicle is greater than the preset first speed threshold;
   the first distance between the first object and the first target lane line is less than the preset first distance threshold;
   the first predicted time to collision is less than the preset first time threshold; and
   there is no risk of collision in the third oblique front region;
determining to generate the distance adjustment instruction and the speed adjustment instruction, in response to satisfying at least one of the first threshold judgment conditions.

When there are adjacent lanes in both the left and right directions of the vehicle, it is necessary to determine whether the first longitudinal relative speed between the first object and the vehicle is greater than the corresponding first speed threshold, determine whether the first distance between the first object and the first target lane line is less than the corresponding first distance threshold, determine whether the first predicted time to collision is less than the first time threshold, and determine whether there is a risk of collision in the third oblique front region. When at least one of the first threshold judgment conditions is satisfied, for example, the first longitudinal relative speed between the first object and the vehicle is greater than the corresponding first speed threshold, it may be determined that the vehicle is likely to collide with the first object. Then, the distance adjustment instruction and the speed adjustment instruction need to be generated to make the vehicle move laterally along a direction away from the first object and slow down according to a preset acceleration until the vehicle decelerates to the preset speed, ensuring that the vehicle drives at a safe lateral relative distance and longitudinal relative speed in relative to the first object, so as to avoid collisions.

In an embodiment, in order to improve the accuracy in determining whether the vehicle will collide with the first object and avoid colliding with an object in the third oblique front region, it is necessary to combine the conditions of two adjacent lanes to make a comprehensive judgment on whether to generate the distance adjustment instruction and the speed adjustment instruction. That is, when all the threshold judgment conditions in the first threshold judgment conditions are satisfied, the distance adjustment instruction and the speed adjustment instruction are generated. When the vehicle is moving laterally in the direction away from the first object, that is, when moving laterally to the adjacent lane in the right direction, there is a risk of collision with an object in the adjacent lane. Therefore, on the basis of satisfying the threshold judgment conditions that the first longitudinal relative speed between the first object in the first oblique front region and the vehicle is greater than the preset first speed threshold, the first distance between the first object and the first target lane line is less than the preset first distance threshold, and the first predicted time to collision is less than the preset first time threshold, it is also necessary to determine the threshold condition that there is no risk of collision in the third oblique front region is satisfied.

When the distance adjustment instruction and speed adjustment instruction are generated, the vehicle is controlled according to the distance adjustment instruction and the speed adjustment instruction, to move laterally in the direction away from the first object. The moving distance is a third preset moving distance and the speed is reduced to a first preset speed.

In this embodiment, when determining whether there is a risk of collision in the third oblique front region, it is detected whether there is a third object in the third oblique front region. If there is the third object in the third oblique front region, a driving direction of the third object is acquired and a second distance between the third object and the second target lane line is acquired. If the driving direction of the third object is opposite to the driving direction of the vehicle, it is determined whether the second distance is greater than a preset second distance threshold. If the second distance is greater than the second distance threshold, it is determined that there is no risk of collision in the third oblique front region.

If the driving direction of the third object is the same as the driving direction of the vehicle, a first distance to collision is acquired. The first distance to collision is the distance between the third object and the vehicle. It is determined whether the first distance to collision is greater than the corresponding first distance-to-collision threshold and whether the second distance is greater than the corresponding second distance threshold, respectively.

If the first distance to collision is greater than the corresponding first distance-to-collision threshold and the second distance is greater than the corresponding second distance threshold, it is determined that there is no risk of collision in the third oblique front region.

The second target lane line refers to the lane line between the vehicle and the third oblique front region, that is, the lane line between the lane where the vehicle is located and the lane corresponding to the third oblique front region.

In this embodiment, when it is detected that there is no third object in the third oblique front region, it is determined that there is no risk of collision in the third oblique front region. When there is the third object in the third oblique front region, it is necessary to determine whether the vehicle will collide with the third object. When the driving direction of the third object is opposite to the driving direction of the vehicle, it is determined whether the second distance is greater than the second distance threshold. When the second distance is greater than the second distance threshold, it is determined that there is no risk of collision in the third oblique front region. When the driving direction of the third object is the same as the driving direction of the vehicle, the first distance to collision (DTC) is acquired, such as L2 in Figure 2. It is determined whether the first DTC is greater than the corresponding first DTC threshold and whether the second distance is greater than the corresponding second distance threshold, respectively. When the first DTC is greater than the corresponding first DTC threshold and the second distance is greater than the corresponding second distance threshold, it is determined that there is no risk of collision in the third oblique front region.

It is understandable that the above defining the third oblique front region as the region in oblique front of the vehicle in the adjacent lane to the right of the vehicle is only for distinguishing the third oblique front region from the first oblique front region. In practice, when the first oblique front region is the region in oblique front of the vehicle in the adjacent lane to the right of the vehicle, the third oblique front region is the region in oblique front of the vehicle in the adjacent lane to the left of the vehicle.

In the above process of determining whether it is necessary to generate the distance adjustment instruction and the speed adjustment instruction, if the fog lamp or dipped beam of the vehicle is turned on, the wiper switch is in the maximum gear, or the radius of curvature of road is less than the preset radius, it is not required to generate the distance adjustment instruction and speed adjustment instruction, so as to avoid danger.

In step S305, if the parameter adjustment instruction is generated, the lateral relative distance between the vehicle and the object is adjusted according to the distance adjustment instruction, and the driving speed of the vehicle is adjusted according to the speed adjustment instruction.

The above step S305 is similar to step S103 in the embodiment of Figure 1, and will not be repeated in this embodiment.

In this embodiment, when there is no median strip between the lane where the vehicle is located and the adjacent lane corresponding to the first oblique front region, it is determined, according to the driving parameter of the vehicle, the feature information of the first object in the first oblique front region, and the relative information between the vehicle and the first object, whether the vehicle is at risk of collision with the first object. If there is a risk of collision, the vehicle is controlled to laterally move a certain distance along a direction away from the first oblique front region and reduce the driving speed of the vehicle, thus effectively avoiding collisions.

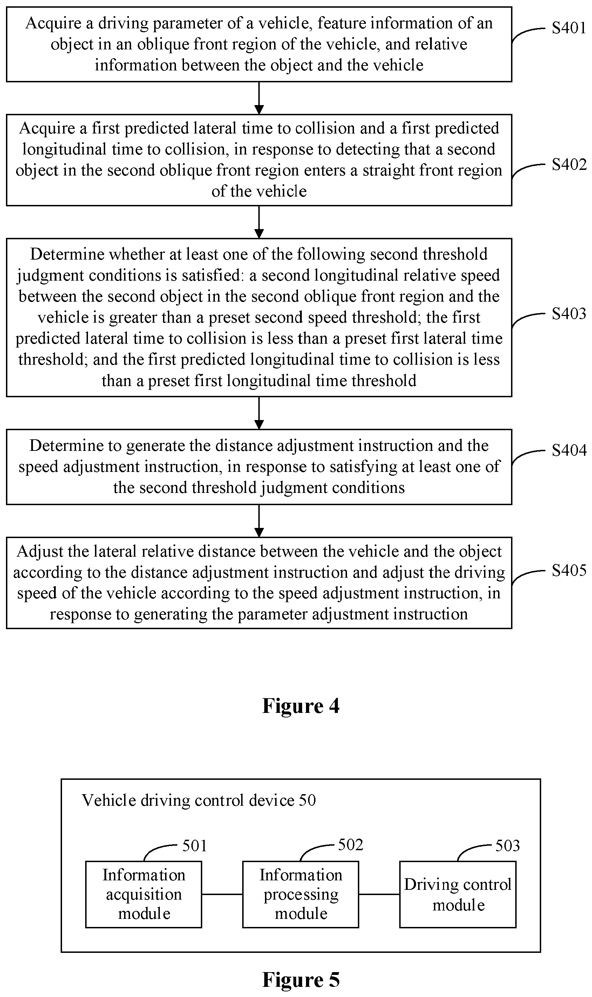

Figure 4 is a third flowchart of a vehicle driving control method according to an embodiment of the present disclosure. On the basis of the embodiment of Figure 1, this embodiment describes in detail the specific implementation process of this embodiment. The oblique front region includes a second oblique front region, and the second oblique front region is a region in oblique front of the vehicle in an adjacent lane of a first direction of the vehicle. The first direction may be, for example, a left direction or a right direction of the vehicle, or the like. As an example, the second oblique front region in the embodiment of the present disclosure is specifically a region in oblique front of the vehicle in the adjacent lane to the left of the vehicle. As shown in Figure 4, the method includes the following steps S401 to S405.

In step S401, a driving parameter of a vehicle, feature information of an object in the oblique front region of the vehicle, and relative information between the object and the vehicle are acquired. The relative information includes a lateral relative distance between the object and the vehicle.

The above step S401 is similar to step S101 in the embodiment of Figure 1, and will not be repeated in this embodiment.

In step S402, a first predicted lateral time to collision and a first predicted longitudinal time to collision are acquired, in response to detecting that a second object in the second oblique front region enters a straight front region of the vehicle.

When the second object in the second oblique front region suddenly changes to the lane where the vehicle is located or has a tendency to change lanes, it is prone to collision and serious traffic accidents. Therefore, in order to avoid a traffic accident, when the vehicle detects that the second object in the second oblique front region enters the straight front region of the vehicle, it is determined in advance, according to the driving parameter of the vehicle, the feature information of the second object and the relative information between the vehicle and the second object, whether it is needed to laterally move a certain distance along a direction away from the second object and slow down the vehicle, thus to reduce the driver's panic, avoid collision accidents and improve driving safety.

The driving direction specified by the lane corresponding to the second oblique front region is the same as the driving direction of the vehicle.

In step S403, it is determined whether to satisfy at least one of the following second threshold judgment conditions.

The second threshold judgment conditions include:
a second longitudinal relative speed between the second object in the second oblique front region and the vehicle is greater than a preset second speed threshold;
the first predicted lateral time to collision is less than a preset first lateral time threshold; and
the first predicted longitudinal time to collision is less than a preset first longitudinal time threshold.

In this embodiment, it is determined whether the second longitudinal relative speed between the second object and the vehicle is greater than the preset second speed threshold, determine whether the first predicted lateral time to collision is less than the preset first lateral time threshold, and determine whether the first predicted longitudinal time to collision is less than the preset first longitudinal time threshold.

The first predicted lateral time to collision is calculated based on the lateral relative distance and the lateral relative speed between the vehicle and the second object, and the first predicted longitudinal time to collision is calculated based on the longitudinal relative distance and the longitudinal relative speed between the vehicle and the second object.

In step S404, it is determined to generate the distance adjustment instruction and the speed adjustment instruction, in response to satisfying at least one of the second threshold judgment conditions.

In this embodiment, in determining that at least one of the second threshold judgment conditions is satisfied, the distance adjustment instruction is generated to make the vehicle move laterally in a direction away from the second object, and the speed adjustment instruction is generated to make the vehicle slow down according to a preset acceleration until the vehicle decelerates to the preset speed, ensuring that the vehicle drives at a safe lateral relative distance and longitudinal relative speed in relative to the second object, so as to avoid collisions.

In an embodiment, in order to improve the accuracy in determining whether the vehicle will collide with the second object, the distance adjustment instruction and the speed adjustment instruction may be generated when all the threshold judgment conditions in the above second threshold judgment conditions are satisfied.

In an embodiment, a third distance between the second object and the third target lane line is acquired. The threshold judgment condition in the above second threshold judgment conditions that the first predicted lateral time to collision is less than the preset first lateral time threshold may be replaced by that the third distance between the second object and the third target lane line is less than the preset third distance threshold.

It is understandable that the above defining the second oblique front region as the oblique front region of the vehicle in the adjacent lane to the left of the vehicle is only for the convenience of understanding. In practice, it is detected not only the adjacent lane in the left direction of the vehicle, but also the adjacent lane in the right direction of the vehicle. When the current lane of the vehicle has only one adjacent lane, the second oblique front region is the region in oblique front of vehicle in the adjacent lane. For example, when there is only an adjacent lane to the left of the vehicle, the second oblique front region is the region in oblique front of the vehicle in the adjacent lane to the left of the vehicle. When there is only an adjacent lane to the right of the vehicle, the second oblique front region is the region in oblique front of the vehicle in the adjacent lane to the right of the vehicle. It is not limited whether the lane corresponding to the above second oblique front region is the adjacent lane to the right of the vehicle or the adjacent lane to the left of the vehicle herein.

In a possible design, the vehicle may also have two adjacent lanes, including a left adjacent lane and a right adjacent lane. Correspondingly, the oblique front region also includes a fourth oblique front region. The fourth oblique front region is a region in oblique front of the vehicle in an adjacent lane in a second direction of the vehicle. The second direction may be the right direction of the vehicle. The second threshold judgment conditions also include that there is no risk of collision in the fourth oblique front region.

Correspondingly, the determining whether to generate the parameter adjustment instruction according to the driving parameter, the feature information of the object and the relative information includes:
determining whether to satisfy at least one of the following second threshold judgment conditions:
   a second longitudinal relative speed between the second object in the second oblique front region and the vehicle is greater than a preset second speed threshold;
   the first predicted lateral time to collision is less than a preset first lateral time threshold;
   the first predicted longitudinal time to collision is less than a preset first longitudinal time threshold; and
   there is no risk of collision in the fourth oblique front region;
   and,
determining to generate the distance adjustment instruction and the speed adjustment instruction, in response to satisfying at least one of the second threshold judgment conditions.

In an embodiment, when there are adjacent lanes in both the left and right directions of the vehicle, it is necessary to determine whether the second longitudinal relative speed between the second object and the vehicle is greater than the preset second speed threshold, whether the first predicted lateral time to collision is less than the preset first lateral time threshold, whether the first predicted longitudinal time to collision is less than the preset first longitudinal time threshold, and whether there is no risk of collision in the fourth oblique front region. When at least one of the second threshold judgment conditions is satisfied, for example, the second longitudinal relative speed between the second object and the vehicle is greater than the corresponding second speed threshold, it may be determined that the vehicle is likely to collide with the second object. Then, the distance adjustment instruction and the speed adjustment instruction need to be generated to make the vehicle move laterally along a direction away from the second object and slow down according to a preset acceleration until the vehicle decelerates to the preset speed, ensuring that the vehicle drives at a safe lateral relative distance and longitudinal relative speed in relative to the second object, so as to avoid collisions.

In an embodiment, in order to improve the accuracy in determining whether the vehicle will collide with the second object and avoid colliding with an object in the fourth oblique front region, it is necessary to combine the conditions of two adjacent lanes to make a comprehensive judgment on whether to generate the distance adjustment instruction and the speed adjustment instruction. That is, when all the threshold judgment conditions in the second threshold judgment conditions are satisfied, the distance adjustment instruction and the speed adjustment instruction are generated. When the vehicle is moving laterally in the direction away from the second object, that is, when moving laterally toward the adjacent lane in the right direction, there is a risk of collision with an object in the adjacent lane. Therefore, on the basis of satisfying the threshold judgment conditions that the second longitudinal relative speed between the second object and the vehicle is greater than the preset second speed threshold, the first predicted lateral time to collision is less than the preset first lateral time threshold, and the first predicted longitudinal time to collision is less than the preset first longitudinal time threshold, it is also necessary to determine the threshold judgment condition that there is no risk of collision in the fourth oblique front region is satisfied.

In this embodiment, when determining whether there is a risk of collision in the fourth oblique front region, it is detected whether there is a fourth object in the fourth oblique front region. If there is the fourth object in the fourth oblique front region, a driving direction of the fourth object is acquired and a fourth distance between the fourth object and the fourth target lane line is acquired. If the driving direction of the fourth object is opposite to the driving direction of the vehicle, it is determined whether the fourth distance is greater than a preset fourth distance threshold. If the fourth distance is greater than the fourth distance threshold, it is determined that there is no risk of collision in the fourth oblique front region.

If the driving direction of the fourth object is the same as the driving direction of the vehicle, a second distance to collision is acquired. The second distance to collision is the distance between the fourth object and the vehicle. It is determined whether the second distance to collision is greater than the corresponding second distance-to-collision threshold and whether the fourth distance is greater than the corresponding fourth distance threshold, respectively.

If the second distance to collision is greater than the corresponding second distance-to-collision threshold and the fourth distance is greater than the corresponding fourth distance threshold, it is determined that there is no risk of collision in the fourth oblique front region.

It is understandable that the above defining the fourth oblique front region as the region in oblique front of the vehicle in the adjacent lane to the right of the vehicle is only for distinguishing the fourth oblique front region from the second oblique front region. In practice, when the second oblique front region is the region in oblique front of the vehicle in the adjacent lane to the right of the vehicle, the fourth oblique front region is the region in oblique front of the vehicle in the adjacent lane to the left of the vehicle.

In the above process of determining whether it is necessary to generate the distance adjustment instruction and the speed adjustment instruction, if the fog lamp or dipped beam of the vehicle is turned on, the wiper switch is in the maximum gear, or the radius of curvature of road is less than the preset radius, it is not required to generate the distance adjustment instruction and speed adjustment instruction, so as to avoid danger.

In step S405, if the parameter adjustment instruction is generated, the lateral relative distance between the vehicle and the object is adjusted according to the distance adjustment instruction, and the driving speed of the vehicle is adjusted according to the speed adjustment instruction.

The above step S405 is similar to step S103 in the embodiment of Figure 1, and will not be repeated in this embodiment.

In this embodiment, when there is no median strip between the lane where the vehicle is located and the adjacent lane corresponding to the second oblique front region, it is determined, according to the driving parameter of the vehicle, the feature information of the second object in the second oblique front region, and the relative information between the vehicle and the second object, whether the vehicle is at risk of collision with the second object. If there is a risk of collision, the vehicle is controlled to laterally move a certain distance along a direction away from the second oblique front region and reduce the driving speed of the vehicle, thus effectively avoiding collisions.

In an embodiment, the driving conditions include a third condition where the vehicle needs to exceed the object in the oblique front region.

In an embodiment, the oblique front region includes a fifth oblique front region. The fifth oblique front region may be a region in oblique front of the vehicle in an adjacent lane in a first direction of the vehicle. The first direction may be, for example, a left direction or a right direction of the vehicle, or the like. As an example, the fifth oblique front region in the embodiment of the present disclosure is specifically a region located in oblique front of the vehicle in the adjacent lane to the left of the vehicle.

Under the driving condition that the vehicle needs to exceed the object in the oblique front region, the process of adjusting the driving parameter of the vehicle includes the following steps.
1) When the vehicle needs to exceed a fifth object in the fifth oblique front region, a second predicted time to collision is acquired. The second predicted time to collision is the time when the vehicle will collide with the fifth object.
2) It is determined whether at least one of the following third threshold judgment conditions is satisfied. The third threshold judgment conditions includes:
   a third longitudinal relative speed between the fifth object and the vehicle is greater than a preset third speed threshold;
   a fifth distance between the fifth object and the fifth target lane line is less than a preset fifth distance threshold; and
   the second predicted time to collision is less than the preset second time threshold.
      In this embodiment, it is determined whether the third longitudinal relative speed between the fifth object and the vehicle is greater than the corresponding third speed threshold, determine whether the fifth distance between the fifth object and the fifth target lane line is less than the corresponding fifth distance threshold, and determine whether the second predicted time to collision is less than the preset second time threshold.
3) If at least one of the third threshold judgment conditions is satisfied, it is determined to generate the distance adjustment instruction.
4) If the distance adjustment instruction is generated, a lateral relative distance between the vehicle and the object is adjusted according to the distance adjustment instruction.

In this embodiment, if the fifth object is a moving vehicle, and if the relative speed of the vehicle when the vehicle exceeds the fifth object is too high, the air pressure between the vehicle and the fifth object is reduced, resulting in a decreased relative lateral distance between the vehicle and the fifth object, which may not only cause psychological panic to the driver, but also cause traffic accidents such as scratches or collisions. If the fifth object is a pedestrian, an obstacle or a stationary vehicle, there will be a risk of collision when the fifth object is close to the lane line. Thus, when the vehicle needs to exceed the fifth object in the fifth oblique front region, it is necessary to determine whether to adjust the relative lateral distance between the vehicle and the fifth object based on the collected driving parameter of the vehicle, the feature information of the fifth object and the relative information between the vehicle and the fifth object, to keep the vehicle away from the fifth object and avoid collisions.

The driving direction specified by the adjacent lane corresponding to the fifth oblique front region may be the same as the driving direction of the vehicle.

In the process of determining whether to adjust the relative lateral distance between the vehicle and the fifth object, it is necessary to first calculate a time to collision (TTC) based on the collected driving parameter of the vehicle, the feature information of the fifth object and the relative information between the vehicle and the fifth object, and the calculated time to collision serves as the second predicted time to collision.

There are many mature methods for calculating the time to collision, and the method for calculating the time to collision is not limited in the present disclosure.

In this embodiment, if at least one of the third threshold judgment conditions is satisfied, the distance adjustment instruction is generated. For example, only the threshold judgment condition that the third longitudinal relative speed between the fifth object and the vehicle is greater than the corresponding third speed threshold, it may be determined that the vehicle is likely to collide with the fifth object, which means the lateral distance between the vehicle and the fifth object needs to be adjusted. Thus, the distance adjustment instruction is generated to make the vehicle move laterally a first preset moving distance along a direction away from the fifth object, so as to avoid the fifth vehicle.

In an embodiment, in order to improve the accuracy in determining whether the vehicle will collide with the fifth object, the distance adjustment instruction may be generated when all the threshold judging conditions in the third threshold judging conditions are satisfied. That is, in a case that the third longitudinal relative speed between the fifth object and the vehicle is greater than the third speed threshold, the fifth distance between the fifth object and the fifth target lane line is less than the fifth distance threshold, and the second predicted time to collision is less than the preset second time threshold, it is determined that the vehicle is more likely to collide with the fifth object, and the distance adjustment instruction needs to be generated.

After exceeding the fifth object for a certain distance (for example, 10 meters), the vehicle may be controlled to be pulled back to the center area of the lane to continue driving. If the vehicle needs to exceed multiple objects successively, the vehicle is pulled back to the center area of the lane to continue driving after exceeding the multiple objects successively for the certain distance.

It is understandable that the above defining the fifth oblique front region as the region in oblique front of the vehicle in the adjacent lane to the left of the vehicle is only for the convenience of understanding. In practice, it is detected not only the adjacent lane in the left direction of the vehicle, but also the adjacent lane in the right direction of the vehicle. When the current lane of the vehicle has only one adjacent lane, the fifth oblique front region is the region in oblique front of vehicle in the adjacent lane. For example, when there is only an adjacent lane to the left of the vehicle, the fifth oblique front region is the region in oblique front of the vehicle in the adjacent lane to the left of the vehicle. When there is only an adjacent lane to the right of the vehicle, the fifth oblique front region is the region in oblique front of the vehicle in the adjacent lane to the right of the vehicle. It is not limited whether the lane corresponding to the above fifth oblique front region is the adjacent lane to the right of the vehicle or the adjacent lane to the left of the vehicle herein.

In a possible design, the vehicle may also have two adjacent lanes, including a left adjacent lane and a right adjacent lane. Correspondingly, the oblique front region also includes a sixth oblique front region. The sixth oblique front region is a region in oblique front of the vehicle in an adjacent lane in a second direction of the vehicle. The first direction of the vehicle is different from the second direction of the vehicle. The third threshold judgment conditions also include that there is no risk of collision in the sixth oblique front region.

Correspondingly, the determining whether to generate the parameter adjustment instruction according to the driving parameter, the feature information of the object and the relative information includes:
determining whether to satisfy at least one of the following third threshold judgment conditions:
the third longitudinal relative speed between the fifth object and the vehicle is greater than the preset third speed threshold;
the fifth distance between the fifth object and the fifth target lane line is less than the preset fifth distance threshold;
the second predicted time to collision is less than the preset second time threshold; and
there is no risk of collision in the sixth oblique front region;
determining to generate the distance adjustment instruction, in response to satisfying at least one of the third threshold judgment conditions.

If the first direction is the left direction, the second direction is the right direction. When there are adjacent lanes in both the left and right directions of the vehicle, it is necessary to determine whether the third longitudinal relative speed between the fifth object and the vehicle is greater than the corresponding third speed threshold, determine whether the fifth distance between the fifth object and the fifth target lane line is less than the corresponding fifth distance threshold, determine whether the second predicted time to collision is less than the second time threshold, and determine whether there is a risk of collision in the sixth oblique front region. When at least one of the third threshold judgment conditions is satisfied, for example, the third longitudinal relative speed between the fifth object and the vehicle is greater than the corresponding third speed threshold, it may be determined that the vehicle is likely to collide with the fifth object, which means the lateral distance between the vehicle and the fifth object needs to be adjusted. Thus, the distance adjustment instruction is generated to make the vehicle move laterally the first preset moving distance along a direction away from the fifth object, so as to avoid the fifth vehicle.

In an embodiment, in order to improve the accuracy in determining whether the vehicle will collide with the fifth object and avoid colliding with an object in the sixth oblique front region, it is necessary to combine the conditions of two adjacent lanes to make a comprehensive judgment on whether to generate the distance adjustment instruction. That is, when all the threshold judgment conditions in the third threshold judgment conditions are satisfied, the distance adjustment instruction is generated. When the vehicle is moving laterally in the direction away from the fifth object in the fifth oblique front region, that is, when moving laterally to the adjacent lane in the right direction, there is a risk of collision with an object in the adjacent lane. Therefore, on the basis of satisfying the threshold judgment conditions that the third longitudinal relative speed between the fifth object and the vehicle is greater than the third speed threshold, the fifth distance between the fifth object and the fifth target lane line is less than the fifth distance threshold, and the second predicted time to collision is less than the preset second time threshold, it is also necessary to determine that there is no risk of collision in the sixth oblique front region.

In this embodiment, when determining whether there is a risk of collision in the sixth oblique front region, it is detected whether there is a sixth object in the sixth oblique front region. If there is the sixth object in the sixth oblique front region, a driving direction of the sixth object is acquired and a sixth distance between the sixth object and the sixth target lane line is acquired. If the driving direction of the sixth object is opposite to the driving direction of the vehicle, it is determined whether the sixth distance is greater than a preset sixth distance threshold. If the sixth distance is greater than the sixth distance threshold, it is determined that there is no risk of collision in the sixth oblique front region.

If the driving direction of the sixth object is the same as the driving direction of the vehicle, a third distance to collision is acquired. The third distance to collision is the distance between the sixth object and the vehicle. It is determined whether the third distance to collision is greater than the corresponding third distance-to-collision threshold and whether the sixth distance is greater than the corresponding sixth distance threshold, respectively.

If the third distance to collision is greater than the corresponding third distance-to-collision threshold and the sixth distance is greater than the corresponding sixth distance threshold, it is determined that there is no risk of collision in the sixth oblique front region.

In this embodiment, when it is detected that there is no sixth object in the sixth oblique front region, it is determined that there is no risk of collision in the sixth oblique front region. When there is the sixth object in the sixth oblique front region, it is necessary to determine whether the vehicle will collide with the sixth object. The specific determination process is described as follows. The driving direction of the sixth object is acquired and the sixth distance between the sixth object and the sixth target lane line is acquired. When the driving direction of the sixth object is opposite to the driving direction of the vehicle, it is determined whether the sixth distance is greater than the sixth distance threshold. When the sixth distance is greater than the sixth distance threshold, it is determined that there is no risk of collision in the sixth oblique front region. When the driving direction of the sixth object is the same as the driving direction of the vehicle, the third distance to collision is acquired. The third distance to collision is the distance between the sixth object and the vehicle. It is determined whether the third distance to collision is greater than the corresponding third distance-to-collision threshold and whether the sixth distance is greater than the corresponding sixth distance threshold, respectively. When the third distance to collision is greater than the corresponding third distance-to-collision threshold and the sixth distance is greater than the corresponding sixth distance threshold, it is determined that there is no risk of collision in the sixth oblique front region.

The sixth target lane line refers to the lane line between the vehicle and the sixth oblique front region, that is, the lane line between the lane where the vehicle is located and the lane corresponding to the sixth oblique front region.

It is understandable that the above defining the sixth oblique front region as the region in oblique front of the vehicle in the adjacent lane to the right of the vehicle is only for distinguishing the sixth oblique front region from the fifth oblique front region. In practice, when the fifth oblique front region is the region in oblique front of the vehicle in the adjacent lane to the right of the vehicle, the sixth oblique front region is the region in oblique front of the vehicle in the adjacent lane to the left of the vehicle.

In the above process of determining whether it is necessary to generate the distance adjustment instruction, if the fog lamp or dipped beam of the vehicle is turned on, the wiper switch is in the maximum gear, or the radius of curvature of road is less than the preset radius, it is not required to generate the distance adjustment instruction, so as to avoid danger.

In this embodiment, when the vehicle needs to exceed the fifth object in the fifth oblique front region, it is determined, according to the driving parameter of the vehicle, the feature information of the fifth object, and the relative information between the vehicle and the fifth object, whether the vehicle is at risk of collision with the fifth object. If there is a risk of collision, the vehicle is controlled to laterally move a certain distance along a direction away from the fifth oblique front region, thus effectively avoiding collisions.

Figure 5 is a schematic structural diagram of a vehicle driving control device according to an example not covered by the claims. As shown in Figure 5, the vehicle driving control device 50 includes: an information acquisition module 501, an information processing module 502, and a driving control module 503.

The information acquisition module 501 is configured to acquire a driving parameter of a vehicle, feature information of an object in an oblique front region of the vehicle, and relative information between the object and the vehicle. The relative information includes a lateral relative distance between the object and the vehicle.

The information processing module 502 is configured to determine whether to generate a parameter adjustment instruction according to the driving parameter, the feature information of the object and the relative information under different driving conditions. The parameter adjustment instruction includes a distance adjustment instruction and/or a speed adjustment instruction. The driving conditions includes a first condition where there is no median strip between the vehicle and an adjacent lane, a second condition where an object in the adjacent lane enters a straight front region of the vehicle, and/or a third condition where the vehicle needs to exceed the object in the adjacent lane.

The driving control module 503 is configured to adjust the lateral relative distance between the vehicle and the object according to the distance adjustment instruction and/or adjust a driving speed of the vehicle according to the speed adjustment instruction, in response to generating the parameter adjustment instruction.

In a possible design, the feature information of the object includes a distance between the object and a target lane line. The target lane line is a lane line between the object and the vehicle. The relative information includes a longitudinal relative speed between the vehicle and the object. The driving parameter includes a driving direction of the vehicle.

In a possible design, the oblique front region includes a first oblique front region. The first oblique front region is a region in oblique front of the vehicle in an adjacent lane in the first direction of the vehicle.

The information processing module is specifically configured to acquire a first predicted time to collision when there is no median strip between the vehicle and the first oblique front region. The first predicted time to collision refers to a time when the vehicle will collide with a first object in the first oblique front region.

The information processing module is further configured to determine whether at least one of the following first threshold judgment conditions is satisfied:
a first longitudinal relative speed between the first object in the first oblique front region and the vehicle is greater than a preset first speed threshold;
a first distance between the first object and a first target lane line is less than a preset first distance threshold; and
the first predicted time to collision is less than a preset first time threshold.

The information processing module is further configured to determine to generate the distance adjustment instruction and the speed adjustment instruction, in response to satisfying at least one of the first threshold judgment conditions.

In a possible design, the oblique front region includes a second oblique front region. The second oblique front region is a region in oblique front of the vehicle in an adjacent lane in the first direction of the vehicle.

The information processing module is specifically configured to acquire a first predicted lateral time to collision and a first predicted longitudinal time to collision, in response to detecting that a second object in the second oblique front region enters a straight front region of the vehicle.

The information processing module is further configured to determine whether to satisfy at least one of the following second threshold judgment conditions:
a second longitudinal relative speed between the second object in the second oblique front region and the vehicle is greater than a preset second speed threshold;
the first predicted lateral time to collision is less than a preset first lateral time threshold; and
the first predicted longitudinal time to collision is less than a preset first longitudinal time threshold.

The information processing module is further configured to generate to generate the distance adjustment instruction and the speed adjustment instruction, in response to satisfying at least one of the second threshold judgment conditions.

In a possible design, the oblique front region also includes a third oblique front region. The third oblique front region is a region in oblique front of the vehicle in an adjacent lane in a second direction of the vehicle. The first direction of the vehicle is different from the second direction of the vehicle.

The information processing module is further configured to determine whether to satisfy at least one of the following first threshold judgment conditions:
the first longitudinal relative speed between the first object in the first oblique front region and the vehicle is greater than the preset first speed threshold;
the first distance between the first object and the first target lane line is less than the preset first distance threshold;
the first predicted time to collision is less than the preset first time threshold; and
there is no risk of collision in the third oblique front region.

The information processing module is further configured to determine to generate the distance adjustment instruction and the speed adjustment instruction, in response to satisfying at least one of the first threshold judgment conditions.

In a possible design, the information processing module is further configured to detect whether there is a third object in the third oblique front region.

The information processing module is further configured to acquire a driving direction of the third object and acquire a second distance between the third object and a second target lane line, if there is the third object in the third oblique front region.

The information processing module is further configured to determine whether the second distance is greater than a preset second distance threshold if the driving direction of the third object is opposite to the driving direction of the vehicle; and determine there is no risk of collision in the third oblique front region if the second distance is greater than the second distance threshold.

In a possible design, the information processing module is further configured to: after acquiring the driving direction of the third object and acquiring the second distance between the third object and the second target lane line, acquire a first distance to collision if the driving direction of the third object is the same as the driving direction of the vehicle. The first distance to collision is a distance between the third object and the vehicle. The information processing module is further configured to determine whether the first distance to collision is greater than a first distance-to-collision threshold and whether the second distance is greater than the second distance threshold.

The information processing module is further configured to determine that there is no risk of collision in the third oblique front region, if the first distance to collision is greater than the first distance-to-collision threshold and the second distance is greater than the second distance threshold.

In a possible design, the information acquisition module is specifically configured to receive the driving parameter sent by a sensor on the vehicle, the feature information of the object sent by a camera on the vehicle, and the relative information sent by a radar device on the vehicle, respectively.

The device according to this embodiment may be used to implement the technical solutions of the above method embodiments, and its implementation principles and technical effects are similar, and will not be repeated here in this embodiment.

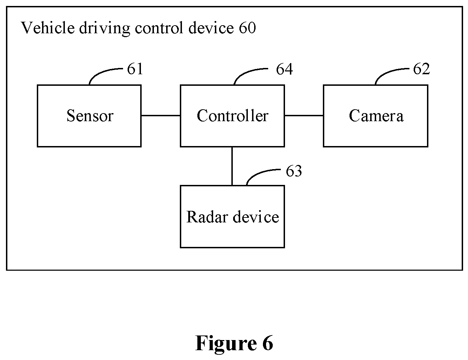

Figure 6 is a schematic diagram of a hardware structure of a vehicle driving control device according to an embodiment of the present disclosure. As shown in Figure 6, the vehicle driving control device 60 according to the embodiment includes a sensor 61, a camera 62, a radar device 63 and a controller 64.

The sensor 61 is configured to collect a driving parameter of a vehicle.

The camera 62 is configured collect feature information of an object in an oblique front region of the vehicle.

The radar device 63 is configured to collect relative information between the object and the vehicle.

The controller 64 includes a memory and a processor. The memory stores a computer program, and the program when being executed by the processor implements steps performed by the receiving device in the above embodiments. For details, reference may be made to the relevant description in the above method embodiments.

The radar device includes a front radar, a first front angle radar, and a second front angle radar.

The front radar is installed on a front anti-collision beam of the vehicle, and the first front angle radar and the second front angle radar are respectively installed on left and right sides of a front bumper of the vehicle.

The radar device also includes a first rear angle radar and a second rear angle radar.

The first rear angle radar and the second rear angle radar are respectively installed on left and right sides of a rear bumper of the vehicle.

A computer-readable storage medium is also provided in an embodiment of the present disclosure. The computer-readable storage medium stores a computer-executable instruction. A processor when executing the computer-executable instruction implements the vehicle driving control method described above.

In the several embodiments provided by the present disclosure, it should be understood that the disclosed device and method may be implemented in other ways. For example, the device embodiments described above are only illustrative. Modules are divided simply based on a logical function, and there may be other divisions in an actual implementation. Multiple modules may be combined or may be integrated to another system, or some features may be omitted, or may not be performed. In addition, the displayed or discussed mutual coupling or direct coupling or communication connection may be through some interfaces, and an indirect coupling or communication connection between devices or modules may be in electrical, mechanical or other forms.

The modules described as separate components may or may not be physically separated, and the components displayed as modules may or may not be physical units, that is, they may be located in one place, or they may be distributed on multiple network units. Some or all of the modules may be selected according to actual needs to achieve the objectives of the solutions of the embodiments.

In addition, the functional modules in the various embodiments of the present disclosure may be integrated into one processing unit, or each module may exist alone physically, or two or more modules may be integrated into one unit. The units formed by the above-mentioned modules may be implemented in the form of hardware, or in the form of hardware plus software functional units.

The above integrated module implemented in the form of a software function module may be stored in a computer readable storage medium. The above software function module is stored in a storage medium including several instructions to make a computer device or a processor execute part of steps of the method according to the various embodiments of the present disclosure. The computer device may be a personal computer, a server, a network device, or the like.

It should be understood that the above processor may be a central processing unit (CPU), or other general-purpose processor, digital signal processor (DSP), application specific integrated circuit. (ASIC), or the like. The general-purpose processor may be a microprocessor or the processor may also be any conventional processor. The steps of the method disclosed in the present disclosure may be directly embodied as executed by a hardware processor, or executed by a combination of hardware and software modules in the processor.

The memory may include a high-speed RAM memory, or may also include a non-volatile storage NVM (such as at least one disk storage), and may also be a U disk, a mobile hard disk, a read-only memory, a magnetic disk, or an optical disk.

The bus may be an industry standard architecture (ISA) bus, a peripheral component interconnection (PCI) bus, an extended industry standard architecture (EISA) bus, or the like. The bus may be divided into an address bus, a data bus, a control bus and so on. For ease of representation, the bus in the drawings of the present disclosure is not limited to only one bus or only one type of bus.

The above-mentioned storage medium may be realized by any type of volatile or non-volatile storage device or their combination, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk. The storage medium may be any available medium that can be accessed by a general-purpose or special-purpose computer.

An exemplary storage medium is coupled to the processor, so that the processor can read information from the storage medium and can write information to the storage medium. The storage medium may also be a part of the processor. The processor and the storage medium may be located in an application specific integrated circuit (ASIC). The processor and the storage medium may also exist as discrete components in an electronic device or a main control device.

A person of ordinary skill in the art may understand that all or part of steps in the above method embodiments may be implemented by a program instructing relevant hardware. The program may be stored in a computer readable storage medium. The program when being executed performs steps of the above method embodiments. The storage medium includes: ROM, RAM, magnetic disk, or optical disk and other medium that can store program codes.

Finally, it should be noted that the above embodiments are only used to illustrate the technical solutions of the present disclosure, and not used to make a limitation on the present disclosure.

## Claims

1. A vehicle driving control method, **characterized by** comprising:
acquiring a driving parameter of a vehicle, feature information of an object in an oblique front region of the vehicle, and relative information between the object and the vehicle, wherein the relative information comprises a lateral relative distance between the object and the vehicle;
determining whether to generate a parameter adjustment instruction according to the driving parameter, the feature information of the object and the relative information under different driving conditions, wherein the parameter adjustment instruction comprises a distance adjustment instruction and a speed adjustment instruction, wherein the driving conditions comprise a first condition where there is no median strip between the vehicle and an adjacent lane, a second condition where an object in the adjacent lane enters a straight front region of the vehicle, and/or a third condition where the vehicle needs to exceed the object in the adjacent lane; and
adjusting the lateral relative distance between the vehicle and the object according to the distance adjustment instruction and adjust a driving speed of the vehicle according to the speed adjustment instruction, in response to generating the parameter adjustment instruction,
wherein the feature information of the object comprises a distance between the object and a target lane line, wherein the target lane line is a lane between the object and the vehicle, the relative information comprises a longitudinal relative speed between the vehicle and the object, and the driving parameter comprises a driving direction of the vehicle,
wherein the oblique front region comprises a first oblique front region, wherein the first oblique front region is a region in an oblique front of the vehicle and located in an adjacent lane in a first direction of the vehicle,
the determining whether to generate the parameter adjustment instruction according to the driving parameter, the feature information of the object and the relative information comprises:
acquiring a first predicted time to collision when there is no median strip between the vehicle and the first oblique front region, wherein the first predicted time to collision refers to a time when the vehicle will collide with a first object in the first oblique front region;
determining whether to satisfy at least one of the following first threshold judgment conditions:
a first longitudinal relative speed between the first object in the first oblique front region and the vehicle is greater than a preset first speed threshold;
a first distance between the first object and a first target lane line is less than a preset first distance threshold; and
the first predicted time to collision is less than a preset first time threshold;
and
determining to generate the distance adjustment instruction and the speed adjustment instruction, in response to satisfying at least one of the first threshold judgment conditions.

2. The method according to claim 1, wherein the oblique front region further comprises a third oblique front region, wherein the third oblique front region is a region in an oblique front of the vehicle and located in an adjacent lane in a second direction of the vehicle, the first direction of the vehicle is different from the second direction of the vehicle;
the first threshold judgment conditions further comprise that there is no risk of collision in the third oblique front region;
the determining whether to generate the parameter adjustment instruction according to the driving parameter, the feature information of the object and the relative information comprises:
determining whether to satisfy at least one of the following first threshold judgment conditions:
the first longitudinal relative speed between the first object in the first oblique front region and the vehicle is greater than the preset first speed threshold;
the first distance between the first object and the first target lane line is less than the preset first distance threshold;
the first predicted time to collision is less than the preset first time threshold; and
there is no risk of collision in the third oblique front region;
and
determining to generate the distance adjustment instruction and the speed adjustment instruction, in response to satisfying at least one of the first threshold judgment conditions.

3. The method according to claim 2, wherein the determining whether there is a risk of collision in the third oblique front region comprises:
detecting whether there is a third object in the third oblique front region;
acquiring a driving direction of the third object and acquiring a second distance between the third object and a second target lane line, if there is the third object in the third oblique front region;
determining whether the second distance is greater than a preset second distance threshold, if the driving direction of the third object is opposite to the driving direction of the vehicle; and
determining there is no risk of collision in the third oblique front region, if the second distance is greater than the second distance threshold.

4. The method according to claim 3, wherein after acquiring the driving direction of the third object and acquiring the second distance between the third object and the second target lane line, the method further comprises:
acquiring a first distance to collision if the driving direction of the third object is the same as the driving direction of the vehicle, wherein the first distance to collision is a distance between the third object and the vehicle;
determining whether the first distance to collision is greater than a first distance-to-collision threshold and whether the second distance is greater than the second distance threshold;
determining that there is no risk of collision in the third oblique front region, if the first distance to collision is greater than the first distance-to-collision threshold and the second distance is greater than the second distance threshold.

5. A vehicle driving control method, **characterized by** comprising:
acquiring a driving parameter of a vehicle, feature information of an object in an oblique front region of the vehicle, and relative information between the object and the vehicle, wherein the relative information comprises a lateral relative distance between the object and the vehicle;
determining whether to generate a parameter adjustment instruction according to the driving parameter, the feature information of the object and the relative information under different driving conditions, wherein the parameter adjustment instruction comprises a distance adjustment instruction and a speed adjustment instruction, wherein the driving conditions comprise a first condition where there is no median strip between the vehicle and an adjacent lane, a second condition where an object in the adjacent lane enters a straight front region of the vehicle, and/or a third condition where the vehicle needs to exceed the object in the adjacent lane; and
adjusting the lateral relative distance between the vehicle and the object according to the distance adjustment instruction and adjust a driving speed of the vehicle according to the speed adjustment instruction, in response to generating the parameter adjustment instruction,
wherein the feature information of the object comprises a distance between the object and a target lane line, wherein the target lane line is a lane between the object and the vehicle, the relative information comprises a longitudinal relative speed between the vehicle and the object, and the driving parameter comprises a driving direction of the vehicle,
wherein the oblique front region comprises a second oblique front region, wherein the second oblique front region is a region in an oblique front of the vehicle and located in an adjacent lane in a first direction of the vehicle,
the determining whether to generate the parameter adjustment instruction according to the driving parameter, the feature information of the object and the relative information comprises:
acquiring a first predicted lateral time to collision and a first predicted longitudinal time to collision, in response to detecting that a second object in the second oblique front region enters a straight front region of the vehicle;
determining whether to satisfy at least one of the following second threshold judgment conditions:
a second longitudinal relative speed between the second object in the second oblique front region and the vehicle is greater than a preset second speed threshold;
the first predicted lateral time to collision is less than a preset first lateral time threshold; and
the first predicted longitudinal time to collision is less than a preset first longitudinal time threshold;
and
determining to generate the distance adjustment instruction and the speed adjustment instruction, in response to satisfying at least one of the second threshold judgment conditions.

6. The method according to claim 5, wherein the oblique front region further comprises a fourth oblique front region, wherein the fourth oblique front region is a region in an oblique front of the vehicle and located in an adjacent lane in a second direction of the vehicle, the first direction of the vehicle is different from the second direction of the vehicle;
the second threshold judgment conditions further comprise that there is no risk of collision in the fourth oblique front region;
the determining whether to generate the parameter adjustment instruction according to the driving parameter, the feature information of the object and the relative information comprises:
determining whether to satisfy at least one of the following second threshold judgment conditions:
the second longitudinal relative speed between the second object in the second oblique front region and the vehicle is greater than the preset second speed threshold;
a first predicted time to collision is less than a preset first time threshold;
the first predicted longitudinal time to collision is less than the preset first longitudinal time threshold; and
there is no risk of collision in the fourth oblique front region;
and
determining to generate the distance adjustment instruction and the speed adjustment instruction, in response to satisfying at least one of the second threshold judgment conditions.

7. The method according to claim 6, wherein the determining whether there is a risk of collision in the fourth oblique front region comprises:
detecting whether there is a fourth object in the fourth oblique front region;
acquiring a driving direction of the fourth object and acquiring a fourth distance between the fourth object and a fourth target lane line, if there is the fourth object in the fourth oblique front region;
determining whether the fourth distance is greater than a preset fourth distance threshold if the driving direction of the fourth object is opposite to the driving direction of the vehicle; and
determining there is no risk of collision in the fourth oblique front region if the fourth distance is greater than the fourth distance threshold.

8. The method according to claim 7, wherein after acquiring the driving direction of the fourth object and acquiring the fourth distance between the fourth object and the fourth target lane line, the method further comprises:
acquiring a second distance to collision if the driving direction of the fourth object is the same as the driving direction of the vehicle, wherein the second distance to collision is a distance between the fourth object and the vehicle;
determining whether the second distance to collision is greater than a second distance-to-collision threshold and whether the fourth distance is greater than the fourth distance threshold;
determining that there is no risk of collision in the third oblique front region, if the second distance to collision is greater than the second distance-to-collision threshold and the fourth distance is greater than the fourth distance threshold.

9. A vehicle driving control method, **characterized by** comprising:
acquiring a driving parameter of a vehicle, feature information of an object in an oblique front region of the vehicle, and relative information between the object and the vehicle, wherein the relative information comprises a lateral relative distance between the object and the vehicle;
determining whether to generate a parameter adjustment instruction according to the driving parameter, the feature information of the object and the relative information under different driving conditions, wherein the parameter adjustment instruction comprises a distance adjustment instruction and a speed adjustment instruction, wherein the driving conditions comprise a first condition where there is no median strip between the vehicle and an adjacent lane, a second condition where an object in the adjacent lane enters a straight front region of the vehicle, and/or a third condition where the vehicle needs to exceed the object in the adjacent lane; and
adjusting the lateral relative distance between the vehicle and the object according to the distance adjustment instruction and adjust a driving speed of the vehicle according to the speed adjustment instruction, in response to generating the parameter adjustment instruction,
wherein the feature information of the object comprises a distance between the object and a target lane line, wherein the target lane line is a lane between the object and the vehicle, the relative information comprises a longitudinal relative speed between the vehicle and the object, and the driving parameter comprises a driving direction of the vehicle,
wherein the oblique front region comprises a first oblique front region and a fifth oblique front region, and the fifth oblique front region is a region in an oblique front of the vehicle and located in an adjacent lane in a first direction of the vehicle,
the determining whether to generate the parameter adjustment instruction according to the driving parameter, the feature information of the object and the relative information comprises:
acquiring a second predicted time to collision when the vehicle needs to exceed a fifth object in the fifth oblique front of the vehicle, wherein the second predicted time to collision is a time when the vehicle will collide with the fifth object;
determining whether to satisfy at least one of the following third threshold judgment conditions,
a third longitudinal relative speed between the fifth object and the vehicle is greater than a preset third speed threshold;
a fifth distance between the fifth object and a fifth target lane line is less than a preset fifth distance threshold; and
the second predicted time to collision is less than a preset second time threshold;
and
determining to generate the distance adjustment instruction, in response to satisfying at least one of the third threshold judgment conditions.

10. The method according to claim 9, wherein the oblique front region further comprises a sixth oblique front region, wherein the sixth oblique front region is a region in an oblique front of the vehicle and located in an adjacent lane in a second direction of the vehicle, and the first direction of the vehicle is different from the second direction of the vehicle,
the third threshold judgment conditions further comprise that there is no risk of collision in the sixth oblique front region;
the determining whether to generate the parameter adjustment instruction according to the driving parameter, the feature information of the fifth object and the relative information comprises:
determining whether to satisfy at least one of the following third threshold judgment conditions:
the third longitudinal relative speed between the fifth object and the vehicle is greater than the preset third speed threshold;
the fifth distance between the fifth object and the fifth target lane line is less than the preset fifth distance threshold;
the second predicted time to collision is less than the preset second time threshold; and
there is no risk of collision in the second oblique front region;
and,
determining to generate the distance adjustment instruction, in response to satisfying at least one of the third threshold judgment conditions.

11. The method according to claim 10, wherein the determining whether there is a risk of collision in the sixth oblique front region comprises:
detecting whether there is a sixth object in the sixth oblique front region;
acquiring a driving direction of the sixth object and acquiring a sixth distance between the sixth object and a sixth target lane line, if there is the sixth object in the sixth oblique front region;
determining whether the sixth distance is greater than a preset sixth distance threshold, if the driving direction of the sixth object is opposite to the driving direction of the vehicle; and
determining there is no risk of collision in the sixth oblique front region, if the sixth distance is greater than the sixth distance threshold.

12. A vehicle driving control device (60), **characterized by** comprising:
a sensor (61), configured to collect a driving parameter of a vehicle;
a camera (62), configured to collect feature information of an object in an oblique front region of the vehicle;
a radar device (63), configured to collect relative information between the object and the vehicle; and
a controller (64) comprising a memory and a processor, wherein the memory stores a computer program, and the program when being executed by the processor implements the vehicle driving control method according to any one of claims 1 to 11.

## Patentansprüche

1. Fahrzeugfahrsteuerungsverfahren, **dadurch gekennzeichnet, dass** es Folgendes umfasst:
Erfassen eines Fahrparameters eines Fahrzeugs, einer Merkmalsinformation eines Objekts in einem schrägen vorderen Bereich des Fahrzeugs und einer Relativinformation zwischen dem Objekt und dem Fahrzeug, wobei die Relativinformation einen lateralen Relativabstand zwischen dem Objekt und dem Fahrzeug umfasst;
Bestimmen, ob unter verschiedenen Fahrbedingungen gemäß dem Fahrparameter, der Merkmalsinformation des Objekts und der Relativinformation eine Parameteranpassungsanweisung erzeugt werden soll, wobei die Parameteranpassungsanweisung eine Abstandsanpassungsanweisung und eine Geschwindigkeitsanpassungsanweisung umfasst, wobei die Fahrbedingungen eine erste Bedingung, bei der sich zwischen dem Fahrzeug und einem benachbarten Fahrstreifen kein Mittelstreifen befindet, eine zweite Bedingung, bei der ein Objekt auf dem benachbarten Fahrstreifen in einen direkt vor dem Fahrzeug liegenden Bereich gelangt, und/oder eine dritte Bedingung, bei der das Fahrzeug an dem Objekt auf dem benachbarten Fahrstreifen vorbeifahren muss, umfassen; und
Anpassen des lateralen Relativabstands zwischen dem Fahrzeug und dem Objekt gemäß der Abstandsanpassungsanweisung und Anpassen einer Fahrgeschwindigkeit des Fahrzeugs gemäß der Geschwindigkeitsanpassungsanweisung als Reaktion auf das Erzeugen der Parameteranpassungsanweisung,
wobei die Merkmalsinformation des Objekts einen Abstand zwischen dem Objekt und einer Zielfahrstreifenbegrenzungslinie umfasst, wobei die Zielfahrstreifenbegrenzungslinie eine Fahrstreifenbegrenzungslinie zwischen dem Objekt und dem Fahrzeug ist, die Relativinformation eine Längsrelativgeschwindigkeit zwischen dem Fahrzeug und dem Objekt umfasst und der Fahrparameter eine Fahrtrichtung des Fahrzeugs umfasst,
wobei der schräge vordere Bereich einen ersten schrägen vorderen Bereich umfasst, wobei der erste schräge vordere Bereich ein Bereich ist, der schräg vor dem Fahrzeug liegt und sich in einem benachbarten Fahrstreifen in einer ersten Richtung des Fahrzeugs befindet,
wobei das Bestimmen, ob gemäß dem Fahrparameter, der Merkmalsinformation des Objekts und der Relativinformation die Parameteranpassungsanweisung erzeugt werden soll, umfasst:
Ermitteln einer ersten voraussichtlichen Zeit bis zur Kollision, wenn sich zwischen dem Fahrzeug und dem ersten schrägen vorderen Bereich kein Mittelstreifen befindet, wobei die erste voraussichtliche Zeit bis zur Kollision eine Zeit bezeichnet, zu der das Fahrzeug mit einem ersten Objekt in dem ersten schrägen vorderen Bereich kollidieren wird;
Bestimmen, ob mindestens eine der folgenden ersten Schwellenwertbeurteilungsbedingungen erfüllt ist:
eine erste Längsrelativgeschwindigkeit zwischen dem ersten Objekt in dem ersten schrägen vorderen Bereich und dem Fahrzeug ist größer als ein vorgegebener erster Geschwindigkeitsschwellenwert;
ein erster Abstand zwischen dem ersten Objekt und einer ersten Zielfahrstreifenbegrenzungslinie ist kleiner als ein vorgegebener erster Abstandsschwellenwert; und
die erste voraussichtliche Zeit bis zur Kollision ist kürzer als ein vorgegebener erster Zeitschwellenwert;
und
Bestimmen, dass die Abstandsanpassungsanweisung und die Geschwindigkeitsanpassungsanweisung erzeugt werden, wenn mindestens eine der ersten Schwellenwertbeurteilungsbedingungen erfüllt ist.

2. Verfahren nach Anspruch 1, wobei der schräge vordere Bereich ferner einen dritten schrägen vorderen Bereich umfasst, wobei der dritte schräge vordere Bereich ein Bereich ist, der schräg vor dem Fahrzeug liegt und sich in einem benachbarten Fahrstreifen in einer zweiten Richtung des Fahrzeugs befindet, wobei sich die erste Richtung des Fahrzeugs von der zweiten Richtung des Fahrzeugs unterscheidet;
wobei die ersten Schwellenwertbeurteilungsbedingungen ferner umfassen, dass in dem dritten schrägen vorderen Bereich kein Kollisionsrisiko besteht; wobei das Bestimmen, ob gemäß dem Fahrparameter, der Merkmalsinformation des Objekts und der Relativinformation die Parameteranpassungsanweisung erzeugt werden soll, umfasst:
Bestimmen, ob mindestens eine der folgenden ersten Schwellenwertbeurteilungsbedingungen erfüllt ist:
die erste Längsrelativgeschwindigkeit zwischen dem ersten Objekt in dem ersten schrägen vorderen Bereich und dem Fahrzeug ist größer als der vorgegebene erste Geschwindigkeitsschwellenwert;
der erste Abstand zwischen dem ersten Objekt und der ersten Zielfahrstreifenbegrenzungslinie ist kleiner als der vorgegebene erste Abstandsschwellenwert;
die erste voraussichtliche Zeit bis zur Kollision ist kürzer als der vorgegebene erste Zeitschwellenwert; und
in dem dritten schrägen vorderen Bereich besteht kein Kollisionsrisiko;
und
Bestimmen, dass die Abstandsanpassungsanweisung und die Geschwindigkeitsanpassungsanweisung erzeugt werden, wenn mindestens eine der ersten Schwellenwertbeurteilungsbedingungen erfüllt ist.

3. Verfahren nach Anspruch 2, wobei das Bestimmen, ob in dem dritten schrägen vorderen Bereich ein Kollisionsrisiko besteht, umfasst:
Feststellen, ob sich ein drittes Objekt in dem dritten schrägen vorderen Bereich befindet;
Ermitteln einer Fahrtrichtung des dritten Objekts und Ermitteln eines zweiten Abstands zwischen dem dritten Objekt und einer zweiten Zielfahrstreifenbegrenzungslinie, wenn sich das dritte Objekt in dem dritten schrägen vorderen Bereich befindet;
Bestimmen, ob der zweite Abstand größer als ein vorgegebener zweiter Abstandsschwellenwert ist, wenn die Fahrtrichtung des dritten Objekts der Fahrtrichtung des Fahrzeugs entgegengesetzt ist; und
Bestimmen, dass in dem dritten schrägen vorderen Bereich kein Kollisionsrisiko besteht, wenn der zweite Abstand größer als der zweite Abstandsschwellenwert ist.

4. Verfahren nach Anspruch 3, wobei das Verfahren nach dem Ermitteln der Fahrtrichtung des dritten Objekts und dem Ermitteln des zweiten Abstands zwischen dem dritten Objekt und der zweiten Zielfahrstreifenbegrenzungslinie ferner umfasst:
Ermitteln eines ersten Abstands bis zur Kollision, wenn die Fahrtrichtung des dritten Objekts mit der Fahrtrichtung des Fahrzeugs übereinstimmt, wobei der erste Abstand bis zur Kollision ein Abstand zwischen dem dritten Objekt und dem Fahrzeug ist;
Bestimmen, ob der erste Abstand bis zur Kollision größer als ein erster Schwellenwert für den Abstand bis zur Kollision ist und ob der zweite Abstand größer als der zweite Abstandsschwellenwert ist;
Bestimmen, dass in dem dritten schrägen vorderen Bereich kein Kollisionsrisiko besteht, wenn der erste Abstand bis zur Kollision größer als der erste Schwellenwert für den Abstand bis zur Kollision ist und der zweite Abstand größer als der zweite Abstandsschwellenwert ist.

5. Fahrzeugfahrsteuerungsverfahren, **dadurch gekennzeichnet, dass** es Folgendes umfasst:
Erfassen eines Fahrparameters eines Fahrzeugs, einer Merkmalsinformation eines Objekts in einem schrägen vorderen Bereich des Fahrzeugs und einer Relativinformation zwischen dem Objekt und dem Fahrzeug, wobei die Relativinformation einen lateralen Relativabstand zwischen dem Objekt und dem Fahrzeug umfasst;
Bestimmen, ob unter verschiedenen Fahrbedingungen gemäß dem Fahrparameter, der Merkmalsinformation des Objekts und der Relativinformation eine Parameteranpassungsanweisung erzeugt werden soll, wobei die Parameteranpassungsanweisung eine Abstandsanpassungsanweisung und eine Geschwindigkeitsanpassungsanweisung umfasst, wobei die Fahrbedingungen eine erste Bedingung, bei der sich zwischen dem Fahrzeug und einem benachbarten Fahrstreifen kein Mittelstreifen befindet, eine zweite Bedingung, bei der ein Objekt auf dem benachbarten Fahrstreifen in einen direkt vor dem Fahrzeug liegenden Bereich gelangt, und/oder eine dritte Bedingung, bei der das Fahrzeug an dem Objekt auf dem benachbarten Fahrstreifen vorbeifahren muss, umfassen; und
Anpassen des lateralen Relativabstands zwischen dem Fahrzeug und dem Objekt gemäß der Abstandsanpassungsanweisung und Anpassen einer Fahrgeschwindigkeit des Fahrzeugs gemäß der Geschwindigkeitsanpassungsanweisung als Reaktion auf das Erzeugen der Parameteranpassungsanweisung,
wobei die Merkmalsinformation des Objekts einen Abstand zwischen dem Objekt und einer Zielfahrstreifenbegrenzungslinie umfasst, wobei die Zielfahrstreifenbegrenzungslinie eine Fahrstreifenbegrenzungslinie zwischen dem Objekt und dem Fahrzeug ist, die Relativinformation eine Längsrelativgeschwindigkeit zwischen dem Fahrzeug und dem Objekt umfasst und der Fahrparameter eine Fahrtrichtung des Fahrzeugs umfasst,
wobei der schräge vordere Bereich einen zweiten schrägen vorderen Bereich umfasst, wobei der zweite schräge vordere Bereich ein Bereich ist, der schräg vor dem Fahrzeug liegt und sich in einem benachbarten Fahrstreifen in einer ersten Richtung des Fahrzeugs befindet,
wobei das Bestimmen, ob gemäß dem Fahrparameter, der Merkmalsinformation des Objekts und der Relativinformation die Parameteranpassungsanweisung erzeugt werden soll, umfasst:
Ermitteln einer ersten voraussichtlichen lateralen Zeit bis zur Kollision und einer ersten voraussichtlichen longitudinalen Zeit bis zur Kollision, wenn festgestellt wird, dass ein zweites Objekt in dem zweiten schrägen vorderen Bereich in einen direkt vor dem Fahrzeug liegenden Bereich gelangt;
Bestimmen, ob mindestens eine der folgenden zweiten Schwellenwertbeurteilungsbedingungen erfüllt ist:
eine zweite Längsrelativgeschwindigkeit zwischen dem zweiten Objekt in dem zweiten schrägen vorderen Bereich und dem Fahrzeug ist größer als ein vorgegebener zweiter Geschwindigkeitsschwellenwert;
die erste voraussichtliche laterale Zeit bis zur Kollision ist kürzer als ein vorgegebener erster lateraler Zeitschwellenwert; und
die erste voraussichtliche longitudinale Zeit bis zur Kollision ist kürzer als ein vorgegebener erster longitudinaler Zeitschwellenwert;
und
Bestimmen, dass die Abstandsanpassungsanweisung und die Geschwindigkeitsanpassungsanweisung erzeugt werden, wenn mindestens eine der zweiten Schwellenwertbeurteilungsbedingungen erfüllt ist.

6. Verfahren nach Anspruch 5, wobei der schräge vordere Bereich ferner einen vierten schrägen vorderen Bereich umfasst, wobei der vierte schräge vordere Bereich ein Bereich ist, der schräg vor dem Fahrzeug liegt und sich in einem benachbarten Fahrstreifen in einer zweiten Richtung des Fahrzeugs befindet, wobei sich die erste Richtung des Fahrzeugs von der zweiten Richtung des Fahrzeugs unterscheidet;
wobei die zweiten Schwellenwertbeurteilungsbedingungen ferner umfassen, dass in dem vierten schrägen vorderen Bereich kein Kollisionsrisiko besteht; wobei das Bestimmen, ob gemäß dem Fahrparameter, der Merkmalsinformation des Objekts und der Relativinformation die Parameteranpassungsanweisung erzeugt werden soll, umfasst:
Bestimmen, ob mindestens eine der folgenden zweiten Schwellenwertbeurteilungsbedingungen erfüllt ist:
die zweite Längsrelativgeschwindigkeit zwischen dem zweiten Objekt in dem zweiten schrägen vorderen Bereich und dem Fahrzeug ist größer als der vorgegebene zweite Geschwindigkeitsschwellenwert;
eine erste voraussichtliche Zeit bis zur Kollision ist kürzer als ein vorgegebener erster Zeitschwellenwert;
die erste voraussichtliche longitudinale Zeit bis zur Kollision ist kürzer als der vorgegebene erste longitudinale Zeitschwellenwert; und
in dem vierten schrägen vorderen Bereich besteht kein Kollisionsrisiko;
und
Bestimmen, dass die Abstandsanpassungsanweisung und die Geschwindigkeitsanpassungsanweisung erzeugt werden, wenn mindestens eine der zweiten Schwellenwertbeurteilungsbedingungen erfüllt ist.

7. Verfahren nach Anspruch 6, wobei das Bestimmen, ob in dem vierten schrägen vorderen Bereich ein Kollisionsrisiko besteht, umfasst:
Feststellen, ob sich ein viertes Objekt in dem vierten schrägen vorderen Bereich befindet;
Ermitteln einer Fahrtrichtung des vierten Objekts und Ermitteln eines vierten Abstands zwischen dem vierten Objekt und einer vierten Zielfahrstreifenbegrenzungslinie, wenn sich das vierte Objekt in dem vierten schrägen vorderen Bereich befindet;
Bestimmen, ob der vierte Abstand größer als ein vorgegebener vierter Abstandsschwellenwert ist, wenn die Fahrtrichtung des vierten Objekts der Fahrtrichtung des Fahrzeugs entgegengesetzt ist;
und
Bestimmen, dass in dem vierten schrägen vorderen Bereich kein Kollisionsrisiko besteht, wenn der vierte Abstand größer als der vierte Abstandsschwellenwert ist.

8. Verfahren nach Anspruch 7, wobei das Verfahren nach dem Ermitteln der Fahrtrichtung des vierten Objekts und dem Ermitteln des vierten Abstands zwischen dem vierten Objekt und der vierten Zielfahrstreifenbegrenzungslinie ferner umfasst:
Ermitteln eines zweiten Abstands bis zur Kollision, wenn die Fahrtrichtung des vierten Objekts mit der Fahrtrichtung des Fahrzeugs übereinstimmt, wobei der zweite Abstand bis zur Kollision ein Abstand zwischen dem vierten Objekt und dem Fahrzeug ist;
Bestimmen, ob der zweite Abstand bis zur Kollision größer als ein zweiter Schwellenwert für den Abstand bis zur Kollision ist und ob der vierte Abstand größer als der vierte Abstandsschwellenwert ist;
Bestimmen, dass in dem dritten schrägen vorderen Bereich kein Kollisionsrisiko besteht, wenn der zweite Abstand bis zur Kollision größer als der zweite Schwellenwert für den Abstand bis zur Kollision ist und der vierte Abstand größer als der vierte Abstandsschwellenwert ist.

9. Fahrzeugfahrsteuerungsverfahren, **dadurch gekennzeichnet, dass** es Folgendes umfasst:
Erfassen eines Fahrparameters eines Fahrzeugs, einer Merkmalsinformation eines Objekts in einem schrägen vorderen Bereich des Fahrzeugs und einer Relativinformation zwischen dem Objekt und dem Fahrzeug, wobei die Relativinformation einen lateralen Relativabstand zwischen dem Objekt und dem Fahrzeug umfasst;
Bestimmen, ob unter verschiedenen Fahrbedingungen gemäß dem Fahrparameter, der Merkmalsinformation des Objekts und der Relativinformation eine Parameteranpassungsanweisung erzeugt werden soll, wobei die Parameteranpassungsanweisung eine Abstandsanpassungsanweisung und eine Geschwindigkeitsanpassungsanweisung umfasst, wobei die Fahrbedingungen eine erste Bedingung, bei der sich zwischen dem Fahrzeug und einem benachbarten Fahrstreifen kein Mittelstreifen befindet, eine zweite Bedingung, bei der ein Objekt auf dem benachbarten Fahrstreifen in einen direkt vor dem Fahrzeug liegenden Bereich gelangt, und/oder eine dritte Bedingung, bei der das Fahrzeug an dem Objekt auf dem benachbarten Fahrstreifen vorbeifahren muss, umfassen; und
Anpassen des lateralen Relativabstands zwischen dem Fahrzeug und dem Objekt gemäß der Abstandsanpassungsanweisung und Anpassen einer Fahrgeschwindigkeit des Fahrzeugs gemäß der Geschwindigkeitsanpassungsanweisung als Reaktion auf das Erzeugen der Parameteranpassungsanweisung, wobei die Merkmalsinformation des Objekts einen Abstand zwischen dem Objekt und einer Zielfahrstreifenbegrenzungslinie umfasst, wobei die Zielfahrstreifenbegrenzungslinie eine Fahrstreifenbegrenzungslinie zwischen dem Objekt und dem Fahrzeug ist, die Relativinformation eine Längsrelativgeschwindigkeit zwischen dem Fahrzeug und dem Objekt umfasst und der Fahrparameter eine Fahrtrichtung des Fahrzeugs umfasst,
wobei der schräge vordere Bereich einen ersten schrägen vorderen Bereich und einen fünften schrägen vorderen Bereich umfasst und der fünfte schräge vordere Bereich ein Bereich ist, der schräg vor dem Fahrzeug liegt und sich in einem benachbarten Fahrstreifen in einer ersten Richtung des Fahrzeugs befindet,
wobei das Bestimmen, ob gemäß dem Fahrparameter, der Merkmalsinformation des Objekts und der Relativinformation die Parameteranpassungsanweisung erzeugt werden soll, umfasst:
Ermitteln einer zweiten voraussichtlichen Zeit bis zur Kollision, wenn das Fahrzeug an einem fünften Objekt in dem fünften schrägen vorderen Bereich des Fahrzeugs vorbeifahren muss, wobei die zweite voraussichtliche Zeit bis zur Kollision eine Zeit ist, zu der das Fahrzeug mit dem fünften Objekt kollidieren wird;
Bestimmen, ob mindestens eine der folgenden dritten Schwellenwertbeurteilungsbedingungen erfüllt ist:
eine dritte Längsrelativgeschwindigkeit zwischen dem fünften Objekt und dem Fahrzeug ist größer als ein vorgegebener dritter Geschwindigkeitsschwellenwert;
ein fünfter Abstand zwischen dem fünften Objekt und einer fünften Zielfahrstreifenbegrenzungslinie ist kleiner als ein vorgegebener fünfter Abstandsschwellenwert; und
die zweite voraussichtliche Zeit bis zur Kollision ist kürzer als ein vorgegebener zweiter Zeitschwellenwert;
und
Bestimmen, dass die Abstandsanpassungsanweisung erzeugt wird, wenn mindestens eine der dritten Schwellenwertbeurteilungsbedingungen erfüllt ist.

10. Verfahren nach Anspruch 9, wobei der schräge vordere Bereich ferner einen sechsten schrägen vorderen Bereich umfasst, wobei der sechste schräge vordere Bereich ein Bereich ist, der schräg vor dem Fahrzeug liegt und sich in einem benachbarten Fahrstreifen in einer zweiten Richtung des Fahrzeugs befindet, und wobei sich die erste Richtung des Fahrzeugs von der zweiten Richtung des Fahrzeugs unterscheidet,
wobei die dritten Schwellenwertbeurteilungsbedingungen ferner umfassen, dass in dem sechsten schrägen vorderen Bereich kein Kollisionsrisiko besteht; wobei das Bestimmen, ob gemäß dem Fahrparameter, der Merkmalsinformation des fünften Objekts und der Relativinformation die Parameteranpassungsanweisung erzeugt werden soll, umfasst:
Bestimmen, ob mindestens eine der folgenden dritten Schwellenwertbeurteilungsbedingungen erfüllt ist:
die dritte Längsrelativgeschwindigkeit zwischen dem fünften Objekt und dem Fahrzeug ist größer als der vorgegebene dritte Geschwindigkeitsschwellenwert;
der fünfte Abstand zwischen dem fünften Objekt und der fünften Zielfahrstreifenbegrenzungslinie ist kleiner als der vorgegebene fünfte Abstandsschwellenwert;
die zweite voraussichtliche Zeit bis zur Kollision ist kürzer als der vorgegebene zweite Zeitschwellenwert; und
in dem zweiten schrägen vorderen Bereich besteht kein Kollisionsrisiko;
und
Bestimmen, dass die Abstandsanpassungsanweisung erzeugt wird, wenn mindestens eine der dritten Schwellenwertbeurteilungsbedingungen erfüllt ist.

11. Verfahren nach Anspruch 10, wobei das Bestimmen, ob in dem sechsten schrägen vorderen Bereich ein Kollisionsrisiko besteht, umfasst:
Feststellen, ob sich ein sechstes Objekt in dem sechsten schrägen vorderen Bereich befindet;
Ermitteln einer Fahrtrichtung des sechsten Objekts und Ermitteln eines sechsten Abstands zwischen dem sechsten Objekt und einer sechsten Zielfahrstreifenbegrenzungslinie, wenn sich das sechste Objekt in dem sechsten schrägen vorderen Bereich befindet;
Bestimmen, ob der sechste Abstand größer als ein vorgegebener sechster Abstandsschwellenwert ist, wenn die Fahrtrichtung des sechsten Objekts der Fahrtrichtung des Fahrzeugs entgegengesetzt ist; und
Bestimmen, dass in dem sechsten schrägen vorderen Bereich kein Kollisionsrisiko besteht, wenn der sechste Abstand größer als der sechste Abstandsschwellenwert ist.

12. Fahrzeugfahrsteuerungsvorrichtung (60), **dadurch gekennzeichnet, dass** sie Folgendes umfasst:
einen Sensor (61), der dazu ausgebildet ist, einen Fahrparameter eines Fahrzeugs zu erfassen;
eine Kamera (62), die dazu ausgebildet ist, eine Merkmalsinformation eines Objekts in einem schrägen vorderen Bereich des Fahrzeugs zu erfassen;
eine Radarvorrichtung (63), die dazu ausgebildet ist, eine Relativinformation zwischen dem Objekt und dem Fahrzeug zu erfassen; und
eine Steuerung (64), die einen Speicher und einen Prozessor umfasst, wobei der Speicher ein Computerprogramm speichert und das Programm bei Ausführung durch den Prozessor das Fahrzeugfahrsteuerungsverfahren nach einem der Ansprüche 1 bis 11 implementiert.

## Revendications

1. Procédé de commande de conduite de véhicule, **caractérisé en ce qu'**il comprend les étapes consistant à :
acquérir un paramètre de conduite d'un véhicule, des informations de caractéristiques d'un objet dans une région oblique avant du véhicule et des informations relatives entre l'objet et le véhicule, dans lequel les informations relatives comprennent une distance relative latérale entre l'objet et le véhicule ;
déterminer s'il convient de générer une instruction de réglage de paramètre conformément au paramètre de conduite, aux informations de caractéristiques de l'objet et aux informations relatives dans différentes conditions de circulation, dans lequel l'instruction de réglage de paramètre comprend une instruction de réglage de distance et une instruction de réglage de vitesse, dans lequel les conditions de circulation comprennent une première condition dans laquelle il n'y a pas de terre-plein central entre le véhicule et une voie adjacente, une deuxième condition dans laquelle un objet situé dans la voie adjacente pénètre une région directement devant le véhicule, et/ou une troisième condition dans laquelle il est nécessaire que le véhicule dépasse l'objet situé dans la voie adjacente ; et
régler la distance relative latérale entre le véhicule et l'objet conformément à l'instruction de réglage de distance et régler une vitesse de conduite du véhicule conformément à l'instruction de réglage de vitesse, en réponse à la génération de l'instruction de réglage de paramètre,
dans lequel les informations de caractéristiques de l'objet comprennent une distance entre l'objet et une ligne de délimitation des voies cible, dans lequel la ligne de délimitation des voies cible est une ligne située entre l'objet et le véhicule, les informations relatives comprennent une vitesse relative longitudinale entre le véhicule et l'objet, et le paramètre de conduite comprend une direction de circulation du véhicule,
dans lequel la région oblique avant comprend une première région oblique avant, dans lequel la première région oblique avant est une région située obliquement devant le véhicule et située dans une voie adjacente dans une première direction du véhicule,
l'étape de détermination du fait qu'il convienne, ou non, de générer l'instruction de réglage de paramètre conformément au paramètre de conduite, aux informations de caractéristiques de l'objet et aux informations relatives consiste à :
acquérir un premier temps prédit de collision lorsqu'il n'y a pas de terre-plein central entre le véhicule et la première région oblique avant, dans lequel le premier temps prédit de collision correspond à un temps correspondant à un moment auquel le véhicule entrera en collision avec un premier objet dans la première région oblique avant ;
déterminer s'il convient de satisfaire au moins l'une des conditions d'évaluation de premier seuil suivantes parmi :
une première vitesse relative longitudinale entre le premier objet dans la région oblique avant et le véhicule est supérieure à un premier seuil de vitesse prédéfini ;
une première distance entre le premier objet et une première ligne de délimitation des voies cible est inférieure à un premier seuil de distance prédéfini ; et
le premier temps prédit de collision est inférieur à un premier seuil de temps prédéfini ; et
déterminer de générer l'instruction de réglage de distance et l'instruction de réglage de vitesse en réponse à la satisfaction d'au moins l'une des conditions d'évaluation de premier seuil.

2. Procédé selon la revendication 1, dans lequel la région oblique avant comprend en outre une troisième région oblique avant, dans lequel la troisième région oblique avant est une région située obliquement devant le véhicule et située dans une voie adjacente dans une seconde direction du véhicule, la première direction du véhicule étant différente de la seconde direction du véhicule ;
les conditions d'évaluation de premier seuil comprennent en outre une absence de risque de collision dans la troisième région oblique avant ;
l'étape de détermination du fait qu'il convienne, ou non, de générer l'instruction de réglage de paramètre conformément au paramètre de conduite, aux informations de caractéristiques de l'objet et aux informations relatives consiste à :
déterminer s'il convient de satisfaire au moins l'une des conditions d'évaluation de premier seuil suivantes parmi :
la première vitesse relative longitudinale entre le premier objet dans la première région oblique avant du véhicule est supérieure au premier seuil de vitesse prédéfini ;
la première distance entre le premier objet et la première ligne de délimitation des voies cible est inférieure au premier seuil de distance prédéfini ;
le premier temps prédit de collision est inférieur au premier seuil de temps prédéfini ; et
il n'y a pas de risque de collision dans la troisième région oblique avant ; et
déterminer de générer l'instruction de réglage de distance et l'instruction de réglage de vitesse en réponse à la satisfaction d'au moins l'une des conditions d'évaluation de premier seuil.

3. Procédé selon la revendication 2, dans lequel l'étape de détermination de la présence, ou non, d'un risque de collision dans la troisième région oblique avant consiste à :
détecter s'il y a un troisième objet dans la troisième région oblique avant ;
acquérir une direction de circulation du troisième objet et acquérir une deuxième distance entre le troisième objet et une deuxième ligne de délimitation des voies cible, si le troisième objet est présent dans la troisième région oblique avant ;
déterminer si la deuxième distance est supérieure à un deuxième seuil de distance prédéfini, si la direction de circulation du troisième objet est opposée à la direction de circulation du véhicule ; et
déterminer qu'il n'y a pas de risque de collision dans la troisième région oblique avant si la deuxième distance est supérieure au deuxième seuil de distance.

4. Procédé selon la revendication 3, dans lequel, après l'étape d'acquisition de la direction de circulation du troisième objet et d'acquisition de la deuxième distance entre le troisième objet et la deuxième ligne de délimitation des voies cible, le procédé comprend en outre les étapes consistant à :
acquérir une première distance de collision si la direction de circulation du troisième objet est la même que la direction de circulation du véhicule, dans lequel la première distance de collision est une distance entre le troisième objet et le véhicule ;
déterminer si la première distance de collision est supérieure à un premier seuil de distance de collision et si la deuxième distance est supérieure au deuxième seuil de distance ;
déterminer qu'il n'y a pas de risque de collision dans la troisième région oblique avant, si la première distance de collision est supérieure au premier seuil de distance de collision et si la deuxième distance est supérieure au deuxième seuil de distance.

5. Procédé de commande de conduite de véhicule, **caractérisé en ce qu'**il comprend les étapes consistant à :
acquérir un paramètre de conduite d'un véhicule, des informations de caractéristiques d'un objet dans une région oblique avant du véhicule et des informations relatives entre l'objet et le véhicule, dans lequel les informations relatives comprennent une distance relative latérale entre l'objet et le véhicule ;
déterminer s'il convient de générer une instruction de réglage de paramètre conformément au paramètre de conduite, aux informations de caractéristiques de l'objet et aux informations relatives dans différentes conditions de circulation, dans lequel l'instruction de réglage de paramètre comprend une instruction de réglage de distance et une instruction de réglage de vitesse, dans lequel les conditions de circulation comprennent une première condition dans laquelle il n'y a pas de terre-plein central entre le véhicule et une voie adjacente, une deuxième condition dans laquelle un objet situé dans la voie adjacente pénètre une région directement devant le véhicule, et/ou une troisième condition dans laquelle il est nécessaire que le véhicule dépasse l'objet dans la voie adjacente ; et
régler la distance relative latérale entre le véhicule et l'objet conformément à l'instruction de réglage de distance et régler une vitesse de conduite du véhicule conformément à l'instruction de réglage de vitesse, en réponse à la génération de l'instruction de réglage de paramètre,
dans lequel les informations de caractéristiques de l'objet comprennent une distance entre l'objet et une ligne de délimitation des voies cible, dans lequel la ligne de délimitation des voies cible est une ligne située entre l'objet et le véhicule, les informations relatives comprennent une vitesse relative longitudinale entre le véhicule et l'objet, et le paramètre de conduite comprend une direction de circulation du véhicule,
dans lequel la région oblique avant comprend une deuxième région oblique avant, dans lequel la deuxième région oblique avant est une région située obliquement devant le véhicule et située dans une voie adjacente dans une première direction du véhicule,
l'étape de détermination du fait qu'il convienne, ou non, de générer l'instruction de réglage de paramètre conformément au paramètre de conduite, aux informations de caractéristiques de l'objet et aux informations relatives consiste à :
acquérir un premier temps latéral prédit de collision et un premier temps longitudinal prédit de collision, en réponse à la détection du fait qu'un deuxième objet situé dans la deuxième région oblique avant pénètre une région directement devant le véhicule ;
déterminer s'il convient de satisfaire au moins l'une des conditions d'évaluation de deuxième seuil suivantes parmi :
une deuxième vitesse relative longitudinale entre le deuxième objet dans la deuxième région oblique avant et le véhicule est supérieure à un deuxième seuil de vitesse prédéfini ;
le premier temps latéral prédit de collision est inférieur à un premier seuil de temps latéral prédéfini ; et
le premier temps longitudinal prédit de collision est inférieur à un premier seuil de temps longitudinal prédéfini ;
et
déterminer de générer l'instruction de réglage de distance et l'instruction de réglage de vitesse en réponse à la satisfaction d'au moins l'une des conditions d'évaluation de deuxième seuil.

6. Procédé selon la revendication 5, dans lequel la région oblique avant comprend en outre une quatrième région oblique avant, dans lequel la quatrième région oblique avant est une région située obliquement devant le véhicule et située dans une voie adjacente dans une seconde direction du véhicule, la première direction du véhicule étant différente de la seconde direction du véhicule ;
les conditions d'évaluation de deuxième seuil comprennent en outre le fait qu'il n'y a pas de risque de collision dans la quatrième région oblique avant ;
l'étape de détermination du fait qu'il convienne, ou non, de générer l'instruction de réglage de paramètre conformément au paramètre de conduite, aux informations de caractéristiques de l'objet et aux informations relatives consiste à :
déterminer s'il convient de satisfaire au moins l'une des conditions d'évaluation de deuxième seuil suivantes parmi :
la deuxième vitesse relative longitudinale entre le deuxième objet dans la deuxième région oblique avant et le véhicule est supérieure au deuxième seuil de vitesse prédéfini ;
le premier temps prédit de collision est inférieur à un premier seuil de temps prédéfini ;
le premier temps longitudinal prédit de collision est inférieur au premier seuil de temps longitudinal prédéfini ; et
il n'y a pas de risque de collision dans la quatrième région oblique avant ;
et
déterminer de générer l'instruction de réglage de distance et l'instruction de réglage de vitesse en réponse à la satisfaction d'au moins l'une des conditions d'évaluation de deuxième seuil.

7. Procédé selon la revendication 6, dans lequel l'étape de détermination de la présence, ou non, d'un risque de collision dans la quatrième région oblique avant consiste à :
déterminer s'il y a un quatrième objet dans la quatrième région oblique avant ;
acquérir une direction de circulation du quatrième objet et acquérir une quatrième distance entre le quatrième objet et une quatrième ligne de délimitation des voies cible, si le quatrième objet est présent dans la quatrième région oblique avant ;
déterminer si la quatrième distance est supérieure à un quatrième seuil de distance prédéfini si la direction de circulation du quatrième objet est opposée à la direction de circulation du véhicule ; et
déterminer qu'il n'y a pas de risque de collision dans la quatrième région oblique avant si la quatrième distance est supérieure au quatrième seuil de distance.

8. Procédé selon la revendication 7, dans lequel, après l'étape d'acquisition de la direction de circulation du quatrième objet et d'acquisition de la quatrième distance entre le quatrième objet et la quatrième ligne de délimitation des voies cible, le procédé comprend en outre les étapes consistant à :
acquérir une deuxième distance de collision si la direction de circulation du quatrième objet est la même que la direction de circulation du véhicule, dans lequel la deuxième distance de collision est une distance entre le quatrième objet et le véhicule ;
déterminer si la deuxième distance de collision est supérieure à un deuxième seuil de distance de collision et si la quatrième distance est supérieure au quatrième seuil de distance ;
déterminer qu'il n'y a pas de risque de collision dans la troisième région oblique avant si la deuxième distance de collision est supérieure au deuxième seuil de distance de collision et si la quatrième distance est supérieure au quatrième seuil de distance.

9. Procédé de commande de conduite de véhicule, **caractérisé en ce qu'**il comprend les étapes consistant à :
acquérir un paramètre de conduite d'un véhicule, des informations de caractéristiques d'un objet dans une région oblique avant du véhicule et des informations relatives entre l'objet et le véhicule, dans lequel les informations relatives comprennent une distance relative latérale entre l'objet et le véhicule ;
déterminer s'il convient de générer une instruction de réglage de paramètre conformément au paramètre de conduite, aux informations de caractéristiques de l'objet et aux informations relatives dans différentes conditions de conduite, dans lequel l'instruction de réglage de paramètre comprend une instruction de réglage de distance et une instruction de réglage de vitesse, dans lequel les conditions de circulation comprennent une première condition dans laquelle il n'y a pas de terre-plein central entre le véhicule et une voie adjacente, une deuxième condition dans laquelle un objet situé dans la voie adjacente pénètre une région directement devant le véhicule, et/ou une troisième condition dans laquelle il est nécessaire que le véhicule dépasse l'objet situé dans la voie adjacente ; et
régler la distance relative latérale entre le véhicule et l'objet conformément à l'instruction de réglage de distance et régler une vitesse de conduite du véhicule conformément à l'instruction de réglage de vitesse, en réponse à la génération de l'instruction de réglage de paramètre,
dans lequel les informations de caractéristiques de l'objet comprennent une distance entre l'objet et une ligne de délimitation des voies cible, dans lequel la ligne de délimitation des voies cible est une ligne située entre l'objet et le véhicule, les informations relatives comprennent une vitesse relative longitudinale entre le véhicule et l'objet, et le paramètre de conduite comprend une direction de circulation du véhicule,
dans lequel la région oblique avant comprend une première région oblique avant et une cinquième région oblique avant, et la cinquième région oblique avant est une région située obliquement devant le véhicule et située dans une voie adjacente dans une première direction du véhicule,
l'étape de détermination du fait qu'il convienne, ou non, de générer l'instruction de réglage de paramètre conformément au paramètre de conduite, aux informations de caractéristiques de l'objet et aux informations relatives consiste à :
acquérir un deuxième temps prédit de collision lorsqu'il est nécessaire que le véhicule dépasse un cinquième objet dans la cinquième région oblique avant du véhicule, dans lequel le deuxième temps prédit de collision est un temps correspondant au moment auquel le véhicule entrera en collision avec le cinquième objet ;
déterminer s'il convient de satisfaire au moins l'une des conditions d'évaluation de troisième seuil suivantes parmi :
une troisième vitesse relative longitudinale entre le cinquième objet et le véhicule est supérieure à un troisième seuil de vitesse prédéfini ;
une cinquième distance entre le cinquième objet et une cinquième ligne de délimitation des voies cible est inférieure à un cinquième seuil de distance prédéfini ; et
le deuxième temps prédit de collision est inférieur à un deuxième seuil de temps prédéfini ; et
déterminer de générer l'instruction de réglage de distance en réponse à la satisfaction d'au moins l'une des conditions d'évaluation de troisième seuil.

10. Procédé selon la revendication 9, dans lequel la région oblique avant comprend en outre une sixième région oblique avant, dans lequel la sixième région oblique avant est une région située obliquement devant le véhicule et située dans une voie adjacente dans une seconde direction du véhicule, et la première direction du véhicule est différente de la seconde direction du véhicule,
les conditions d'évaluation de troisième seuil comprennent en outre une absence de risque de collision dans la sixième région oblique avant ;
l'étape de détermination du fait qu'il convienne, ou non, de générer l'instruction de réglage de paramètre conformément au paramètre de conduite, aux informations de caractéristiques du cinquième objet et aux informations relatives consiste à :
déterminer s'il convient de satisfaire au moins l'une des conditions d'évaluation de troisième seuil suivantes parmi :
la troisième vitesse relative longitudinale entre le cinquième objet et le véhicule est supérieure au troisième seuil de vitesse prédéfini ;
la cinquième distance entre le cinquième objet et la cinquième ligne de délimitation des voies cible est inférieure au cinquième seuil de distance prédéfini ;
le deuxième temps prédit de collision est inférieur au deuxième seuil de temps prédéfini ; et
il n'y a pas de risque de collision dans la deuxième région oblique avant ; et
déterminer de générer l'instruction de réglage de distance en réponse à la satisfaction d'au moins l'une des conditions d'évaluation de troisième seuil.

11. Procédé selon la revendication 10, dans lequel l'étape de détermination de la présence, ou non, d'un risque de collision dans la sixième région oblique avant consiste à :
détecter s'il y a un sixième objet dans la sixième région oblique avant ;
acquérir une direction de circulation du sixième objet et acquérir une sixième distance entre le sixième objet et une sixième ligne de délimitation des voies cible, si le sixième objet est présent dans la sixième région oblique avant ;
déterminer si la sixième distance est supérieure à un sixième seuil de distance prédéfini si la direction de circulation du sixième objet est opposée à la direction de circulation du véhicule ; et
déterminer qu'il n'y a pas de risque de collision dans la sixième région oblique avant si la sixième distance est supérieure au sixième seuil de distance.

12. Dispositif de commande de conduite de véhicule (60), **caractérisé en ce qu'**il comprend :
un capteur (61), configuré pour collecter un paramètre de conduite d'un véhicule ;
une caméra (62), configurée pour collecter des informations de caractéristiques d'un objet dans une région oblique avant du véhicule ;
un dispositif de radar (63), configuré pour collecter des informations relatives entre l'objet et le véhicule ; et
un dispositif de commande (64) comprenant une mémoire et un processeur, dans lequel la mémoire maintient un programme d'ordinateur, et le programme, lorsqu'il est exécuté par le processeur, met en œuvre le procédé de commande de conduite de véhicule selon l'une quelconque des revendications 1 à 11.
